(19) Europäisches Patentamt
European Patent Office
Office européen des brevets

(11) **EP 3 880 422 B1**

(12) **EUROPÄISCHE PATENTSCHRIFT**

(45) Veröffentlichungstag und Bekanntmachung des Hinweises auf die Patenterteilung:
**21.05.2025  Patentblatt 2025/21**

(21) Anmeldenummer: **20753310.0**

(22) Anmeldetag: **31.07.2020**

(51) Internationale Patentklassifikation (IPC):
**B28D 1/14** *(2006.01)*        **B28D 1/18** *(2006.01)*
**F16B 25/00** *(2006.01)*

(52) Gemeinsame Patentklassifikation (CPC):
**B28D 1/146; B28D 1/186; F16B 25/0026; F16B 25/0094**

(86) Internationale Anmeldenummer:
**PCT/EP2020/071682**

(87) Internationale Veröffentlichungsnummer:
**WO 2021/023664 (11.02.2021 Gazette 2021/06)**

(54) **SYSTEM UND VERFAHREN ZUM BEFESTIGEN EINES ANKERS IN EINEM MINERALISCHEN UNTERGRUND SOWIE EIN FURCHWERKZEUG ZUM FURCHEN EINES INNENGEWINDES IN EINEM BOHRLOCH**

SYSTEM AND METHOD FOR SECURING AN ANCHOR IN A MINERAL SUBSTRATE AS WELL AS A TOOL FOR GROOVING AN INTERNAL THREAD IN A BOREHOLE

SYSTÈME ET PROCÉDÉ DE FIXATION D'UN ANCRAGE DANS UN SUBSTRAT MINÉRAL AINSI QU'UN OUTIL DE RAINURAGE D'UNE FILETAGE INTERNE DANS UN TROU DE FORAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **08.08.2019   DE 102019121463**
**27.03.2020   DE 102020108566**

(43) Veröffentlichungstag der Anmeldung:
**22.09.2021   Patentblatt 2021/38**

(73) Patentinhaber: **Ludwig Hettich Holding GmbH & Co. KG**
**78713 Schramberg-Sulgen (DE)**

(72) Erfinder:
• **HECK, Andreas**
**78126 Königsfeld-Neuhausen (DE)**
• **HETTICH, Ulrich**
**78713 Schramberg (DE)**

(74) Vertreter: **Lucke, Andreas**
**Boehmert & Boehmert Anwaltspartnerschaft mbB Pettenkoferstrasse 22 80336 München (DE)**

(56) Entgegenhaltungen:
EP-A1- 1 795 768          EP-A1- 2 386 770
EP-A1- 3 153 723          EP-A1- 3 388 597
WO-A1-00/73671          WO-A1-2017/025318
DE-A1- 102016 125 201   DE-U1- 202018 103 106
US-B1- 6 296 433

**Beschreibung**

GEBIET DER ERFINDUNG

Die vorliegende Erfindung liegt auf dem Gebiet der Verankerungstechnik. Insbesondere betrifft sie ein System und ein Verfahren zum Befestigen eines Ankers in einem mineralischen Untergrund nach dem Oberbegriff der Ansprüche 1 und 2 bzw. nach dem Oberbegriff des Anspruchs 9 sowie ein Furchwerkzeug nach dem Oberbegriff des Anspruchs 14.

HINTERGRUND DER TECHNIK

Eine Verankerung in mineralischem Untergrund, beispielsweise Beton oder Mauerwerk, hat die Aufgabe, Lasten von einem Anbauteil in den Verankerungsgrund einzuleiten oder, im Sinne einer Bewehrung, Zuglasten innerhalb einer Bauteilstruktur aufzunehmen. Voraussetzung dafür ist, dass diese Verankerung nachträglich im Sinne seiner Verwendung in die Struktur bzw. in den Verankerungsgrund eingebracht werden kann.

Aus dem Stand der Technik sind Schraubanker bekannt, die ein selbstschneidendes Gewinde bzw. Furchgewinde aufweisen, mit dessen Hilfe beim Eindrehen des Schraubankers ein Innengewinde in ein Bohrloch im mineralischen Untergrund gefurcht wird.

Alternativ wurde vorgeschlagen, vor dem Einschrauben des Schraubankers mithilfe eines speziell vorgesehenen Furchwerkzeugs ein Innengewinde in dem Bohrloch auszubilden. Ein solches Werkzeug ist beispielsweise in der EP 0 625 400 A1 offenbart. In der DE 197 35 280 A1 und der DE 199 05 845 A1 ist ein Schrauben-Befestigungs-Satz bekannt, der einen nach Art einer Schraube ausgebildeten Gewindeschneider und eine aus korrosionsfestem Werkstoff bestehende Schraube umfasst.

Die WO 2017/025318A1 offenbart ein Verfahren zum Setzen einer Schraube in einem Substrat aus einem mineralischen Baustoff. Dabei wird mittels eines mit einem Schneidgewinde versehenen Gewindebohrers ein Innengewinde im Bohrloch erzeugt, und anschließend die Schraube in das Bohrloch eingebracht, wobei das Außengewinde der Schraube in das vom Gewindebohrer erzeugte Gewinde im Bohrloch eingeschraubt wird. Gemäß dieser Schrift soll der Außendurchmesser des Schneidgewindes des Gewindebohrers kleiner sein als der Außendurchmesser des Außengewindes der zugehörigen Schraube. Mit anderen Worten wird vorgeschlagen, das Schneidgewinde des Gewindebohrers so zu dimensionieren, dass das vorgeschnittene Innengewinde gegenüber dem Außengewinde der Schraube ein Mindermaß aufweist. Aufgrund dieses Mindermaßes schneidet die Gewindespitze des Außengewindes der Schraube beim Einschrauben der Schraube trotz des vorgefurchten Innengewindes in das Substrat ein, sodass beim Einschrauben der Schraube gezielt lose Substratpartikel erzeugt werden, die nach der Lehre dieser Schrift für eine angestrebte Verpressung der Schraube mit der umgebenden Bohrlochwand sorgen sollen, um das Bohrloch dadurch zu stabilisieren. Bevorzugt ist es nach dieser Schrift, wenn der Außendurchmesser des Schneidgewindes des Gewindebohrers lediglich das 0,85-fache bis 0,92-fache des Außendurchmessers des Außengewindes der Schraube beträgt. Dadurch wird zudem beim Eindrehen der Schraube an der Gewindespitze ein gewisser Eindrehwiderstand erzeugt, der als "solides Setzgefühl" beschrieben wird.

DE 10 2016 125 201 A1 zeigt ein System zum Fügen von zwei Bauteilen, oder zum Armieren eines Bauteils, das eine erste und eine zweite Gewindehülse umfasst, die jeweils folgendes umfassen: ein Außengewinde, mit dessen Hilfe die Gewindehülse in das jeweilige Bauteil einschraubbar ist, und die geeignet ist, mit dem jeweiligen Bauteil einen Verbund zu bilden, und einen Kraftantrieb, mit dem ein Drehmoment zum Einschrauben der Gewindehülse in das jeweilige Bauteil auf die Gewindehülse übertragbar ist. Das System umfasst ferner ein längliches Spannelement, welches geeignet ist, durch die zweite Gewindehülse hindurchgeführt und in die erste Gewindehülse eingeführt oder durch diese durchgeführt zu werden, und das geeignet ist, die erste und die zweite Gewindehülse axial derart zu verspannen, dass die erste und die zweite Gewindehülse gegensinnige Verbundspannungen in dem jeweiligen Bauteil bilden. Ferner wird eine Furchspitze mit einem metrischen Innengewinde offenbart, in die eine das genannte längliche Spannelement bildende Gewindestange eingeschraubt werden kann.

EP3388597A1 offenbart ein Verstärkungselement zum Verstärken von betonierten Platten insbesondere im Bereich von Stützelementen umfasst ein Halteelement, das mit einem selbstschneidenden Aussengewinde ausgestattet ist. Dieses ist in jeweils eine in der betonierten Platte angebrachten Bohrung einschraubbar und ist mit einer Ankereinrichtung versehbar, welche sich auf der Oberfläche der betonierten Platte abstützt. Das Halteelement ist aus einer Hülse gebildet, welche vollständig in die Bohrung der betonierten Platte einschraubbar ist und sich im eingeschraubten Zustand im Wesentlichen über die gesamte Länge der Bohrung erstreckt. Das Aussengewinde ist über die vollständige Länge der Hülse angebracht. In die Hülse ist ein stangenförmiges Spannelement einsetzbar, welches im eingeschraubten Endbereich der Hülse gehalten ist und am aus der Bohrung vorstehenden Endbereich des Spannelements die Ankereinrichtung aufsetzbar und das Spannelement permanent vorspannbar ist. Dadurch lässt sich die betonierte Platte verstärken.

WO 2017/025318 A1 offenbart ein System nach dem Oberbegriff der Ansprüche 1 und 2, ein Verfahren nach dem Oberbegriff des Anspruchs 8 und ein Furchwerkzeug nach dem Oberbegriff des Anspruchs 14.

ZUSAMMENFASSUNG DER ERFINDUNG

Der Erfindung liegt die Aufgabe zugrunde, ein Verfahren und ein System zum Befestigen eines Ankers in einem mineralischen Untergrund anzugeben, welches ein leichtes und sicheres Setzen gestattet, gleichzeitig aber ein zuverlässig hohes Lastniveau ermöglicht.

Diese Aufgabe wird durch ein System nach Ansprüche 1 und 2, ein Verfahren nach Anspruch 8, und ein Furchwerkzeug nach Anspruch 14 gelöst. Vorteilhafte Weiterbildungen sind in den abhängigen Ansprüchen angegeben.

Ein erster Aspekt der Erfindung betrifft ein System zum Befestigen eines Ankers in einem Bohrloch in einem mineralischen Untergrund, insbesondere Beton, Mörtel oder Mauerwerk, das einen Anker mit einem Kernabschnitt und einem Gewindeabschnitt umfasst, wobei der Kernabschnitt einen Kerndurchmesser $d_K$ und der Gewindeabschnitt einen Außendurchmesser $d_G$ hat. Dabei kann der Anker beispielsweise eine an sich bekannte, monolithische Schraube mit einem Betonschraubengewinde sein, und in diesem Falle wäre der "Kernabschnitt" durch den Kern und der "Gewindeabschnitt" durch das Gewinde dieser monolithischen Schraube gebildet. Allerdings ist die Erfindung nicht auf derartige Anker beschränkt. Beispielsweise kann der Anker durch eine Gewindehülse mit einem Außengewinde gebildet sein, die innen hohl ist, und daher keinen "Kern" im engsten Sinne des Wortes hat. Im Sinne der vorliegenden Offenbarung hat sie jedoch einen "Kernabschnitt", der in diesem Fall einem Abschnitt zwischen zwei benachbarten Gewindegängen entspricht. Ferner kann ein Anker im Rahmen der Erfindung auch zweiteilig ausgebildet sein, und beispielsweise eine Wendel mit einem Gewindegrat umfassen, in die im zusammengesetzten Zustand des Ankers eine Gewindestange eingeschraubt wird, die ebenfalls Teil des zweiteiligen Ankers ist. In diesem Fall wird der "Gewindeabschnitt" des Ankers durch den Gewindegrat der Wendel des zweiteiligen Ankers gebildet, wie unten anhand eines Ausführungsbeispiels näher erläutert wird.

Das System umfasst ferner ein Furchwerkzeug zum Furchen eines Innengewindes in dem Bohrloch. Dabei umfasst das Furchwerkzeug einen zumindest näherungsweise zylindrischen oder konischen Grundkörper mit einem führenden und einem nachlaufenden Ende, wobei - typischerweise (aber nicht zwingend notwendigerweise) an dem nachlaufenden Ende - ein Kraftangriff angebracht ist, über den ein Drehmoment zum Eindrehen des Furchwerkzeugs in das Bohrloch und zum Furchen des Gewindes auf den Grundkörper übertragbar ist. Dabei hat der Grundkörper eine Außenfläche, auf der ein Furchgewinde ausgebildet ist, welches geeignet ist, das Innengewinde in die Wand des Bohrlochs zu furchen.

Ferner weist das Furchwerkzeug an seinem führenden Ende ein Antriebselement auf, welches geeignet ist, mit einem Kraftangriff des Ankers oder - im Falle von weiter unten beschriebenen mehrteiligen Ankern - eines Teils desselben zusammenzuwirken, der in das mit dem Furchwerkzeug behandelte Bohrloch einzuschrauben ist. Dies erleichtert das Verfahren zum Setzen des Ankers, der - ebenso wie das Furchwerkzeug - typischerweise mithilfe einer elektrischen Bohrmaschine eingedreht wird, weil das Werkzeug nicht zwischen dem Gewindefurchen und dem Einschrauben des Ankers gewechselt werden muss. Dabei ist gemäß Anspruch 1 das Antriebselement am führenden Ende des Furchwerkzeugs ein Mehrkant- oder ein Sechsrundantrieb, der mit einem entsprechenden Antriebselement bzw. Kraftangriff an dem Anker in Eingriff gebracht werden kann. Die Offenbarung ist aber nicht auf derartige Antriebselemente beschränkt, vielmehr können diese je nach Art des Ankers variieren. Wie unten näher erläutert wird, kann der Anker beispielsweise durch eine Gewindehülse gebildet werden, an deren nachlaufendem Ende beispielsweise eine Nut als Kraftangriff bzw. Antriebselement vorgesehen sein kann; in diesem Fall ist gemäß Anspruch 1 das Antriebselement am führenden Ende des Furchwerkzeugs ein entsprechendes Element, das in diese Nut eingreifen kann.

In manchen Anwendungen kann es von Vorteil sein, wenn der Anker oder zumindest ein Teil desselben vollständig in den mineralischen Untergrund eingesetzt wird, und insbesondere im Bohrloch versenkt wird, so dass sein nachlaufendes Ende von der Oberfläche des Untergrunds beabstandet ist. Dies gilt beispielsweise für Anwendungen, in denen der Anker durch eine Gewindehülse gebildet wird, durch eine Gewindestange, die anders als eine Schraube mit Kopf vollständig im Bohrloch aufgenommen werden kann, oder durch einen unten näher beschriebenen mindestens zweiteiligen Anker, bei dem eine Wendel als Teil des mindestens zweiteiligen Ankers vollständig in das Bohrloch eingeschraubt werden soll.

Für derartige Zwecke ist gemäß Anspruch 2 vorgesehen, dass das Antriebselement des Furchwerkzeugs und der Kraftangriff des Ankers so aufeinander abgestimmt sind, dass sie eine Eingriffsstellung einnehmen können, und in dieser Eingriffsstellung

- die relative Ausrichtung des Furchwerkzeugs und des Ankers oder des genannten Teils desselben derart festgelegt ist, dass das Furchgewinde auf einer gedachten Fortsetzung des Gewindes des Ankers liegt,
- bei einer Drehung des Furchwerkzeugs in Einschraubrichtung ein Drehmoment von dessen Antriebselement auf den Kraftangriff des Ankers oder des Teils desselben übertragbar ist, und
- bei einer Drehung des Furchwerkzeugs entgegen der Einschraubrichtung kein Drehmoment von dessen Antriebselement auf den Kraftangriff des Ankers oder des Teils desselben übertragbar ist.

Dadurch, dass das Furchwerkzeug und der Anker in der genannten Eingriffsstellung so in Bezug aufeinander ausgerichtet sind, dass das Furchgewinde auf der gedachten Fortsetzung des Ankergewindes liegt, kann das Furchwerkzeug beim versenkenden Einschrauben des Ankers bzw. Ankerteils erneut in das Bohrloch eingeschraubt werden, ohne ein weiteres Gewinde zu furchen, weil das Furchgewinde durch die Synchronisierung mit dem Ankergewinde automatisch in das bereits bestehende gefurchte Gewinde im Bohrloch geführt wird. Solange das Furchwerkzeug in Einschraubrichtung gedreht wird, überträgt es ein Drehmoment von seinem Antriebselement auf den Kraftangriff des Ankers/Ankerteils, sodass dieser bzw. dieses in das im Bohrloch gefurchte Gewinde geschraubt wird. Wenn der Anker bzw. der Teil desselben die erwünschte Einsatztiefe erreicht hat, wird die Drehrichtung des Furchwerkzeugs umgekehrt, sodass es aus dem Bohrloch herausgeschraubt wird. Bei dieser umgekehrten Drehrichtung wird kein Drehmoment auf den Kraftangriff des Ankers/Ankerteils ausgeübt, sodass der Anker/der Ankerteil in der versenkten Position verbleibt.

Für das System nach Anspruch 2 sind verschiedene Ausgestaltungen des Antriebselements des Furchwerkzeugs und des Kraftangriffs des Ankers/Ankerteils möglich, die diese Funktionalität bieten, und dieser Aspekt der Erfindung ist nicht auf eine spezielle Ausgestaltung beschränkt. In bevorzugten Ausführungsformen weist das Antriebselement des Furchwerkzeugs eine erste Anschlagsfläche auf, deren Flächennormale $n$ mit einem Tangentialvektor $t$ einen Winkel von maximal 45°, vorzugsweise maximal 30° und besonders vorzugsweise maximal 15° bildet, wobei der Tangentialvektor $t$ definiert ist als Vektorprodukt aus einem Axialvektor $a$, der in Richtung auf das vorlaufende Ende des Furchwerkzeugs gerichtet ist, und einem Radialvektor $r$, dessen Spitze auf der ersten Anschlagsfläche liegt, sodass gilt: $t = a \times r$, und wobei der Kraftangriff des Ankers/Ankerteils eine erste Anschlagsfläche aufweist, die an der ersten Anschlagsfläche des Antriebselements anliegt, wenn das Antriebselement und der Kraftangriff die Eingriffsstellung einnehmen.

Der Tangentialvektor $t$ ist anschaulich gesprochen ein Vektor, der zu jeder Zeit angibt, in welche Richtung sich die erste Anschlagsfläche aufgrund der Drehung des Furchwerkzeugs in Einschraubrichtung bewegt. Dieser Drehung ist noch eine axiale Bewegung aufgrund der Gewindesteigung überlagert, die durch den Tangentialvektor $t$ jedoch nicht berücksichtigt wird. In der vorliegenden bevorzugten Ausführungsform soll diese Richtung zumindest annähernd mit der Flächennormalen $n$ der ersten Anschlagfläche übereinstimmen, nämlich einen Winkel von maximal 45°, vorzugsweise maximal 30° und besonders vorzugsweise maximal 15° mit der Flächennormalen $n$ bilden, um beim Eindrehen des Furchwerkzeugs wirksam ein Drehmoment über die ersten Anschlagsflächen auf den Kraftangriff des Ankers/Ankerteils übertragen zu können. Ferner helfen die ersten Anschlagsflächen dabei, die relative Ausrichtung des Furchwerkzeugs und des Ankers/Ankerteils in Bezug auf ihre Drehstellung zu definieren, wenn die ersten Anschlagsflächen in der genannten Eingriffsstellung aneinander anliegen, um dadurch die Synchronisierung des Ankergewindes und des Furchgewindes in Bezug auf ihre Drehstellung sicherzustellen. Beim Herausdrehen des Furchwerkzeugs hingegen heben sich die ersten Anschlagsflächen einfach voneinander ab, sodass kein Drehmoment vom Furchwerkzeug auf den Kraftangriff des Ankers/Ankerteils übertragen wird, und der Anker/Ankerteil im Untergrund verbleiben kann, während das Furchwerkzeug herausgedreht wird.

In einer vorteilhaften Weiterbildung weist das Antriebselement des Furchwerkzeugs eine zweite Anschlagsfläche auf, deren Flächennormale eine Komponente in Richtung des Axialvektors $a$ hat, und der Kraftantrieb des Ankers/Ankerteils weist eine zweite Anschlagsfläche auf, die an der zweiten Anschlagsfläche des Antriebselements anliegt, wenn das Antriebselement und der Kraftantrieb die Eingriffsstellung einnehmen. Die zweiten Anschlagflächen helfen dabei, die relativen Ausrichtungen des Furchwerkzeugs und des Ankers/Ankerteils in Bezug auf ihre axiale Position zu definieren wenn die zweiten Anschlagsflächen in der genannten Eingriffstellung aneinander anliegen, um dadurch die Synchronisierung des Ankergewindes und des Furchgewindes bezüglich ihrer axialen Position sicherzustellen.

In einer vorteilhaften Weiterbildung hat das Antriebselement einen axialen Vorsprung und der Kraftangriff des Ankers eine Aufnahme zum Aufnehmen des axialen Vorsprungs, wenn das Antriebselement und der Kraftantrieb die Eingriffsstellung einnehmen. Durch die Kombination von axialem Vorsprung und der Aufnahme kann ein sicherer Eingriff zwischen dem Antriebselement des Furchwerkzeugs und dem Kraftangriff des Ankers/Ankerteils hergestellt werden.

Vorzugsweise wird der Anker durch eine Gewindehülse oder der Teil des Ankers durch eine Wendel gebildet, und wird die Aufnahme zum Aufnehmen des axialen Vorsprung durch den Innenraum der Gewindehülse bzw. der Wendel gebildet.

Vorzugsweise sind auf der Außenfläche des Grundkörpers eine Mehrzahl von Erhebungen ausgebildet, die jeweils eine Schneidkante aufweisen, wobei sämtliche Schneidkanten zumindest abschnittsweise auf einem gedachten Zylinder mit einem Durchmesser ($d_o$) liegen, und wobei die Schneidkanten geeignet sind, beim Eindrehen des Furchwerkzeugs in das Bohrloch die Innenwand des Bohrlochs zumindest teilweise abzutragen, um die Innenwand des Bohrlochs dem gedachten Zylinder anzupassen.

Abweichend von der Lehre der WO 2017/025318 legen die Untersuchungen der Erfinder nahe, dass eine signifikante Laststeigerung nur durch eine Stabilisierung der Betonkonsole am Gewindegrund des Schraubankers möglich ist. Dies wurde durch lastniveaukritische Versuche der Erfinder, speziell in gerissenem Beton, bestätigt. Unter Belastung treten unter den Gewindeflanken des Schraubankers hohe Pressungen auf, die zu einer Art "Plastifizierung" der Betonmatrix führen, bei der Poren verdrängt werden und sich die Betonmatrix irreversibel verformt. Das Ausbrechen der Konsole kann verhindert werden, wenn der Anker eine ausreichende Stützwirkung erzeugt, die dabei hilft, den hohen Pressungen der lokalen Lasteinleitung zu widerstehen. Aus diesem Grund sollte der Zwischenraum zwischen dem Kern des Ankers und der Bohrlochwand möglichst über den gesamten Verbund möglichst gering sein.

In der Regel werden Bohrlöcher in Beton mit einem zweischneidigen Hammerbohrer erzeugt. Dabei wird ein Hammerstoß mit einer Drehbewegung in der Weise überlagert, dass im Arbeitshub der Meißel ohne Rotation in den Verankerungsgrund getrieben und der Rückhub mit einer Rotationsbewegung überlagert wird. Bei diesem Verfahren entstehen Bohrlöcher, die nicht zylindrisch sind, sondern eine Art "Helixform" haben. Der Querschnitt des Bohrlochs nimmt dabei typischerweise die Form eines sogenannten Gleichdicks an, mit einer Seitenzahl, die die Anzahl der Schneiden des Bohrers um 1 übersteigt. Im typischen Fall eines Bohrers mit zwei Schneiden ergibt sich als Spezialfall ein Querschnitt in Form eines sogenannten Releaux-Dreiecks. Dies führt dazu, dass, obwohl der Kern an vielen Stellen an der Bohrlochwand anliegt, sodass der Schraubenkern eng im Bohrloch zu sitzen scheint und beim Einschrauben auch erhebliche Reibungskräfte zwischen Abschnitten des Kerns und Abschnitten des nicht-zylindrischen Bohrlochs auftreten (die eine einfache Vergrößerung des Kerndurchmessers des Ankers verbieten würden), das Volumen des Zwischenraums zwischen dem Kern des Ankers und der Bohrlochwand insgesamt größer ist, als für eine optimale Stützwirkung erforderlich wäre.

Es wird ein Furchwerkzeug vorgesehen, das einen zumindest näherungsweise zylindrischen oder konischen Grundkörper mit einer Außenfläche hat, auf der ein Furchgewinde ausgebildet ist, welches geeignet ist, das Innengewinde in die Wand des Bohrlochs zu furchen. Auf der Außenfläche des Grundkörpers sind vorzugsweise eine Mehrzahl von Erhebungen ausgebildet, die jeweils eine Schneidkante aufweisen, wobei sämtliche Schneidkanten zumindest abschnittsweise auf einem gedachten Zylinder mit einem Durchmesser $d_o$ liegen, und wobei die Schneidkanten geeignet sind, beim Eindrehen des Furchwerkzeugs in das Bohrloch die Innenwand des Bohrlochs zumindest teilweise abzutragen, um die Innenwand des Bohrlochs dem gedachten Zylinder anzupassen. Dadurch wird das Bohrloch typischerweise nicht nur in seiner Form homogenisiert, sondern auch noch geglättet. Dies gestattet es, Anker mit einem größeren Kerndurchmesser zu verwenden, als ohne eine derartige Bearbeitung der Bohrlochinnenwand mithilfe des Furchwerkzeugs, ohne die Eindrehkräfte aufgrund der Reibung des Kerns an der Bohrlochwand nennenswert zu steigern. Im Ergebnis kann daher das Gesamtvolumen zwischen dem Kern des Ankers und der Bohrlochwand verringert werden, wodurch die Stützwirkung gesteigert werden kann.

Der Hinweis, dass die Schneidkanten "zumindest abschnittsweise" auf dem gedachten Zylinder liegen, schließt die Möglichkeit ein, dass die Schneidkanten tatsächlich über ihre gesamte Länge auf dem gedachten Zylinder liegen. Dies ist aber nicht notwendig für die Funktion, die Innenwand des Bohrlochs abzutragen, um sie dem gedachten Zylinder anzupassen. Hierfür ist es ausreichend, wenn die Schneidkanten zumindest über einen Teil ihrer Länge, im Extremfall nur an einem Punkt auf diesem Zylinder liegen. Beispielsweise könnten die Schneidkanten lediglich in einem in Eindrehrichtung hinteren, d. h. nachlaufenden Abschnitt auf der Mantelfläche des gedachten Zylinders liegen, aber in einem führenden Abschnitt in Eindrehrichtung konisch zulaufen, um das Eindrehen zu erleichtern. In diesem führenden Abschnitt könnten die Schneidkanten dabei beispielsweise auf der Mantelfläche eines Kegelstumpfes liegen, der in Eindrehrichtung des Furchwerkzeugs konisch zuläuft, und dessen Basisfläche denselben Durchmesser hat, wie der gedachte Zylinder. Es ist sogar denkbar, wenn auch nicht bevorzugt, dass die Schneidkanten über ihre gesamte Länge auf einem Kegelstumpf liegen, dessen Mantellinien nur geringfügig gegenüber der Mittelachse geneigt sind; in diesem Fall würde dann nur das nachlaufenden Ende der Schneidkante auf der Mantelfläche des gedachten Zylinders liegen, entsprechend dem oben genannten Extremfall, dass sie "nur an einem Punkt" auf dem gedachten Zylinder liegen.

In einer vorteilhaften Ausführungsform wird die Schneidkante durch eine Kante gebildet, an der eine im wesentlichen radiale Fläche, die gegenüber der Radialrichtung um weniger als 30°, vorzugsweise weniger als 15° geneigt ist, und eine im wesentlichen tangentiale Fläche, die gegenüber der Radialrichtung um mindestens 45° geneigt ist, aneinander stoßen, wobei die Flächennormale der im wesentlichen radialen Fläche in Einschraubrichtung zeigt. In diesem Fall ist mit der "Einschraubrichtung" die Drehrichtung beim Einschrauben gemeint, also eine tangentiale Richtung, nicht die axiale Vortriebsrichtung, die sich beim Einschrauben ergibt. Die "im wesentlichen radiale Fläche" ist dabei zumindest grob gesprochen senkrecht zur Bohrlochwand, während die "im wesentlichen tangentiale Fläche" eine Fläche ist, die zumindest eher parallel als senkrecht zur Bohrlochwand ist. Durch diese Form kann eine stabile, ausreichend scharfe und verschleißarme Schneidkante bereitgestellt werden.

In einer vorteilhaften Ausführungsform weist das Furchwerkzeug mindestens vier, vorzugsweise mindestens sechs der genannten Erhebungen mit zugehöriger Schneidkante auf. Eine derart große Anzahl von Erhebungen hilft dabei, eine nahezu zylindrische Form der Bohrlochinnenwand bereitzustellen. Eine Ausführungsform mit lediglich zwei oder drei Schneidkanten ist möglich, führt in der Praxis aber zu einer weniger guten Form des bearbeiteten Bohrlochs und zudem zu einem erhöhten Verschleiß jeder einzelnen Schneidkante. Ähnlich wie beim Bohrer kann sich auch hier eine Querschnittsform ergeben, die einem Gleichdick zumindest ähnelt und sich bei zunehmender Anzahl von Erhebungen einem Kreis annähert, sodass die Form des behandelten Bohrlochs bei größerer Anzahl von Erhebungen einer Zylinderform ähnlicher wird.

In einer bevorzugten Ausführungsform ist der Anker in Bezug auf den Kerndurchmesser $d_K$ mit einer Fertigungstoleranz von weniger als 0,2 · (d$_b$)$^{0,3}$ mm hergestellt, ist das Furchwerkzeug in Bezug auf den Durchmesser d$_o$ mit einer Fertigungstoleranz von weniger als 0,1 · (d$_b$)$^{0,3}$ mm hergestellt, und gilt:

$$0,0 \text{ mm} \leq d_o - d_K \leq 0,7 \text{ mm, vorzugsweise } 0,1 \text{ mm} \leq d_o - d_K \leq 0,5 \text{ mm.}$$

Dabei entspricht der Nenndurchmesser d$_b$ des Bohrlochs der Größenangabe eines Bohrers, auf den der Anker abgestimmt ist, in Millimeter, ist aber selbst dimensionslos. Wenn also der Anker beispielsweise zur Verwendung mit einem 8 mm-Bohrer bestimmt ist, dann wäre d$_b$ = 8. Die Fertigungstoleranzen skalieren hierbei mit der 0,3-ten Potenz des Nenndurchmessers d$_b$. Mit dieser Bemessung ergibt sich ein sehr geringes Volumen zwischen dem Kern des Ankers und der Bohrlochwand, das in der Praxis hohe Tragfähigkeiten unter Last bietet, gleichzeitig aber übermäßige Einschraubdrehmomente aufgrund einer Reibung zwischen der Bohrlochinnenwand und dem Kern des Ankers vermeidet.

In einer vorteilhaften Ausführungsform ist der Anker in Bezug auf den Außendurchmesser d$_G$ seines Gewindes mit einer Fertigungstoleranz von weniger als 0,2 · (d$_b$)$^{0,3}$ mm hergestellt, ist das Furchwerkzeug in Bezug auf den maximalen Außendurchmesser d$_F$ seines Furchgewindes ebenfalls mit einer Fertigungstoleranz von weniger als 0,2 · (d$_b$)$^{0,3}$ mm hergestellt, und es gilt:

$$0,0 \leq (d_F - d_G)/d_K \leq 0,15, \text{ vorzugsweise } 0,025 \leq (d_F - d_G)/d_K \leq 0,10$$

Hierbei berücksichtigt die Bezugnahme auf den "maximalen Außendurchmesser d$_F$ des Furchgewindes" den Umstand, dass das Furchgewinde typischerweise einen variablen Außendurchmesser hat, um einen Anschnitt zu bilden. Für die Tiefe des letztendlich gefurchten Innengewindes ist aber nur der maximale Außendurchmesser d$_F$ maßgeblich. Ähnliches gilt auch für das Gewinde des Ankers, welches ebenfalls an seinem vorlaufenden Ende einen ansteigenden Gewindedurchmesser haben kann, allerdings ist der Außendurchmesser des Gewindes des Ankers in der Regel über den größten Teil der Länge des Ankers konstant. Mit dem Außendurchmesser d$_G$ ist hier der Durchmesser des kleinsten gedachten Zylinders gemeint, in den das Ankergewinde als Ganzes einbeschrieben werden kann.

Abweichend von der Lehre der WO 2017/025318 sieht diese Ausführungsform der Erfindung gerade nicht vor, den Außendurchmesser d$_G$ des Gewindes des Ankers größer zu wählen, als den maximalen Außendurchmesser d$_F$ des Furchgewindes. Während die WO 2017/025318 ein Mindermaß des vorgeschnittenen Innengewindes gegenüber dem Außengewinde des Ankers vorschlägt, um künstlich Substratpartikel abzutragen und das Eindrehmoment zum Zwecke eines "soliden Setzgefühls" zu erhöhen, strebt ein Aspekt der vorliegenden Offenbarung eine Bearbeitung des Bohrlochs derart an, dass das Bohrloch selbst schon möglichst überall eng am Kern anliegt. Ein limitierender Faktor für den Ankerdurchmesser ist trotz der Bearbeitung des Bohrlochs zur Annäherung an eine ideale Zylinderform eine Reibung des Kerns an der Bohrlochwand und eine damit einhergehende Erhöhung des Eindrehmoments. Die bevorzugte Ausführungsform der Erfindung vermeidet daher den zusätzlichen Eindrehwiderstand, wie er in der WO 2017/025318 durch Verformungsarbeit an der Spitze des Ankergewindes bewusst erzeugt wird, zugunsten der Möglichkeit, den Kerndurchmesser des Ankers größer zu wählen. Man könnte zwar vermuten, dass eine Steigerung der Last auch durch ein besonders enges Anliegen der Gewindegangspitze des Ankers am Verankerungsgrund, oder gar ein Verspannen der Gewindegangspitze erreicht werden kann. Dies ist nach Erkenntnissen der Erfinder aber in der Praxis nicht der Fall. Nach Erkenntnissen der Erfinder ist der lastbegrenzende Mechanismus bei einem Schraubanker das Verhalten des Ankers unter Last in einem sich öffnenden oder schließenden Riss. Wenn der Riss sich öffnet, liegt die Gewindegangspitze aber ohnehin frei, sodass der erhoffte Mechanismus in diesem Fall nicht zum Tragen kommt.

In einer vorteilhaften Ausführungsform weist das Furchgewinde eine Mehrzahl von Windungen auf, und ist die Mehrzahl von Erhebungen zwischen Windungen des Furchgewindes angeordnet. Dies führt zu einer optimalen Führung der Schneidkanten im Bohrloch auf der Mantelfläche des gedachten Zylinders und somit zu einer verbesserten Ausgestaltung des bearbeiteten Bohrlochs.

Vorzugsweise weist das Furchgewinde weniger als vier Windungen, besonders vorzugsweise zwischen 2,8 und 3,8 Windungen auf. Auf diese Weise kann die Kraft, die zum Eindrehen des Furchwerkzeugs benötigt wird, ausreichend klein gehalten werden, und zwar auch dann, wenn mithilfe der Schneidkanten beim Eindrehen des Furchwerkzeugs die Wand des Bohrlochs teilweise abgetragen bzw. glatt gemahlen wird.

In einer vorteilhaften Ausführungsform hat das Furchtwerkzeug, vorzugsweise auf der dem nachlaufenden Ende näheren Seite des Furchgewindes, ein ringförmiges Abstreifelement, das geeignet ist, Bohrmehl von der Bohrlochwand abzustreifen. Auf diese Weise wird das mit Hilfe des Furchwerkzeugs behandelte Bohrloch zum größten Teil von Bohrmehl und Abrieb durch die Schneidkanten gereinigt. Es ist nach dieser Ausführungsform, abweichend von der oben genannten WO 2017/025318, also nicht beabsichtigt, dass nennenswerte Mengen an Substratpartikeln im Bohrloch zwischen Anker und Bohrlochwand verbleiben. Vielmehr soll die noch nicht verformte Betonmatrix im wesentlichen unmittelbar durch den Kern des Ankers bzw. den Gewindegrund gestützt werden, der aufgrund der Bearbeitung des Bohrlochs mithilfe des Furchwerkzeugs näher an der noch nicht unter Last verformten Betonmatrix liegen kann, als im Stand der Technik.

Vorzugsweise nimmt der Außendurchmesser des Furchgewindes in Richtung auf das führende Ende ab, um das Eindrehen des Furchwerkzeugs zu erleichtern.

Vorzugsweise sind in dem Furchgewinde Ausnehmungen ausgebildet und sind zwischen benachbarten Ausnehmungen Schneidezähne, insbesondere keilförmige Schneidezähne gebildet, wobei vorzugsweise zumindest ein Teil der Ausnehmungen der gesamten Höhe des Furchgewindes entsprechen, sodass das Furchgewinde abschnittsweise unterbrochen ist.

Vorzugsweise hat das Furchwerkzeug, zumindest aber dessen Furchgewinde eine RockwellHärte von mindestens 55 HRC, vorzugsweise von mindestens 60 HRC. Das Furchwerkzeug, zumindest aber das Furchgewinde kann aus einem legierten Stahl, Werkzeugstahl, Stellit, einem Keramik-Werkstoff oder einem Hartmetall bestehen.

In bevorzugten Ausführungsformen ist das Furchwerkzeug zum vielfachen Gebrauch bestimmt. Darin unterscheidet sich das Furchwerkzeug von einem Teil der im Stand der Technik bekannten Furchwerkzeuge, beispielsweise dem Gewindeschneider aus DE 199 05 845 A1, der explizit nur für den einmaligen Einsatz bestimmt ist.

In manchen Ausführungsformen ist der Anker durch eine Schraube gebildet, bei der der genannte Gewindeabschnitt kraft-, stoff- oder formschlüssig mit dem genannten Kernabschnitt verbunden ist. Da das Gewinde der Schraube nicht zum Furchen im Verankerungsgrund ausgebildet sein muss, bestehen hinsichtlich des Materials und des Herstellungsverfahrens große Freiheiten, die im Hinblick auf Herstellungskosten und/oder die jeweilige Anforderung an die Schraube in der geplanten Verwendung ausgenutzt werden können. In bevorzugten Ausführungsformen besteht die Schraube beispielsweise zumindest überwiegend aus korrosionsfestem Stahl, dessen Härte zum eigenständigen Furchen eines Gewindes in einem mineralischen Untergrund nicht ausreichen würde, aus Nichteisenmetall, insbesondere Aluminium, oder aus Kunststoff, der in bestimmten Ausführungsformen faserverstärkt sein kann.

In einer alternativen Ausführungsform wird der Anker durch eine Gewindehülse gebildet, die ein Außengewinde aufweist, das den genannten Gewindeabschnitt bildet. Dabei kann die Gewindehülse zusätzlich ein Innengewinde, insbesondere ein metrisches Innengewinde aufweisen. In besonders bevorzugten Ausführungsformen ist die Gewindehülse aus einem Profilband gewickelt, das eine radial innere und eine radial äußere Seite aufweist, wobei auf der radial äußeren Seite ein Gewindegrat ausgebildet ist, der geeignet ist, in das mithilfe des Furchwerkzeugs gefurchte Innengewinde im Bohrloch eingeschraubt zu werden. Derartige gewickelte Gewindehülsen lassen sich sehr kostengünstig herstellen, allerdings ist es technisch nicht einfach, derartige gewickelte Gewindehülsen so auszubilden, dass sie ihr eigenes Gewinde in einem mineralischen Untergrund furchen können. Eine Schwierigkeit ist dabei die ausreichende Härte zumindest in dem furchenden Teil des Gewindes, eine weitere Schwierigkeit ist die beschränkte Torsionsfestigkeit einer gewickelten Hülse, die es schwierig macht, die zum Einschrauben und gleichzeitigen Gewindefurchen erforderlichen Drehmomente vom nachlaufenden Ende, an dem sich üblicherweise der Kraftangriff befinden würde, zum führenden Ende zu übertragen, an dem die Furcharbeit verrichtet wird. In Anbetracht dieser Schwierigkeiten wurden spezielle Modifikationen einer gewickelten Gewindehülse vorgeschlagen, die beispielsweise in DE 10 2013 09987 A1 und EP 3 219 442 A1 beschrieben sind. Die genannten Anforderungen an die Gewindehülse treten aber nicht oder jedenfalls in weitaus geringerem Umfang auf, wenn sie in einem erfindungsgemäßen System, in Kombination mit dem Furchwerkzeug verwendet werden. Auch für die Gewindehülse bestehen im Rahmen des erfindungsgemäßen Systems die genannten Freiheitsgrade in Bezug auf die zu verwendenden Materialien, unter denen gleichfalls korrosionsfester Stahl, Nichteisenmetall, insbesondere Aluminium, oder Kunststoff, insbesondere faserverstärkter Kunststoff bevorzugt sind. Man beachte, dass die Gewindehülse auch als "Anker" im Sinne der Erfindung aufzufassen ist. Dabei wird der "Kernabschnitt" durch die äußere Hülsenwand, zwischen den Gewindegängen, gebildet.

In einer besonders bevorzugten Ausführungsform ist der Anker mindestens zweiteilig ausgebildet, und umfasst einerseits eine Wendel, die in das mithilfe des Furchwerkzeugs gefurchte Innengewinde im Bohrloch einschraubbar ist. Dabei ist die Wendel vorzugsweise durch ein gewickeltes Profilband gebildet, das eine radial innere und eine radial äußere Seite aufweist, wobei auf der radial äußeren Seite ein Gewindegrat ausgebildet ist, der geeignet ist, in das mithilfe des Furchwerkzeugs gefurchte Innengewinde im Bohrloch eingeschraubt zu werden. Weiterhin umfasst der zweiteilige Anker eine Schraube oder Gewindestange, mit einem Außengewinde, das geeignet ist, in die Wendel eingeschraubt zu werden. Dabei kann die Gewindestange insbesondere durch einen Schalungsankerstab gebildet sein, wie er beispielsweise von der Firma BETOmax kommerziell erhältlich ist, und der beispielsweise ein B15 oder ein B20 Gewinde aufweisen kann. Dabei hat die Schraube oder Gewindestange vorzugsweise ein im Querschnitt rechteckiges oder trapezförmiges Gewinde, mit einer abgeflachten Gewindespitze, die in diesem Fall den genannten Kernabschnitt des zweiteiligen Ankers, oder zumindest einem Teil des Kernabschnitts bildet. Diese zweiteilige Ausführung des Ankers hat eine Reihe technischer Vorteile. Einerseits lassen sie sich sehr kostengünstig herstellen, was insbesondere bei großen Längen zum Tragen kommt. Dies gilt insbesondere für Varianten, bei denen eine Gewindestange von der Art des genannten Schalungsankerstabes zum Einsatz kommt, die sehr kostengünstig ist und in quasi beliebigen Längen im Betonbau ohnehin vorrätig ist. Durch Kombination mit der Wendel und dem Furchwerkzeug können diese an sich bekannten, preisgünstigen Gewindestangen fest und einfach im Verankerungsgrund verankert werden, und insbesondere für die nachträgliche Armierung, für den Anschluss eines Betonteils an eine bestehende Betonstruktur oder für die Ausbildung von Übergreifungsstößen verwendet werden.

Ein weiterer Vorteil des zweiteiligen Ankers besteht darin, dass dieser die Möglichkeit eines Nachspreizens bietet, wenn es zu Rissen im Verankerungsgrund, insbesondere Beton kommt. Hierfür ist es von Vorteil, wenn das Außengewinde der Schraube bzw. Gewindestange mindestens eine geneigte Gewindeflanke hat, die geeignet ist, die Wendel bei Zugbelastungen (d.h. Last in einer Richtung aus dem Bohrloch heraus) und/oder bei Druckbelastungen (d.h. Last in Richtung in das Bohrloch hinein) radial aufzuspreizen, wobei die mindestens eine geneigte Gewindeflanke mit der Radialrichtung einen Winkel von mindestens 30°, vorzugsweise von mindestens 45° bildet. Die Haftreibung zwischen der Schraube oder Gewindestange und der Wendel soll dabei ausreichend klein sein, dass die Wendel auch bei der Rissbildung im Verankerungsgrund stets mit dem Verankerungsgrund in Kontakt bleibt, diesem also bei der Rissbildung durch Aufspreizen folgt, was voraussetzt, dass die Haftreibung zwischen dem Verankerungsgrund und der Wendel die effektive Haftreibung zwischen der Wendel und der Schraube/Gewindestange übersteigt.

In einer vorteilhaften Ausführungsform liegt daher ein Haftreibungskoeffizient $\mu_H$ zwischen der mindestens einen Gewindeflanke und dem Abschnitt der Wendel, der bei der genannten Zug- bzw. Druckbelastung an der Gewindeflanke entlanggleiten kann, in einem Bereich von $0,05 \leq \mu_H \leq 0,50$, wobei weiter vorzugsweise gilt: $0,075 \leq \mu_H$, vorzugsweise $0,125 \leq \mu_H$ und/oder $\mu_H \leq 0,25$, vorzugsweise $\mu_H \leq 0,20$.

In alternativen Ausführungsformen kann auch eine zusätzliche Zwischenwendel vorgesehen sein, die zwischen der Schraube und der zuvor genannten Wendel (also zwischen der Schraube und der Wendel, die in das mithilfe des Furchwerkzeugs gefurchte Innengewinde im Bohrloch einzuschrauben ist) angeordnet ist. Die Flanke der Zwischenwendel hat dann die Funktion der oben genannten Gewindeflanke beim Aufspreizen der Wendel. Die Zwischenwendel macht dabei ein speziell für das Aufspreizen geformtes Gewinde der Schraube der Gewindestange entbehrlich. Insbesondere lässt sie sich mit günstig erhältlichen Schrauben oder Gewindestangen, beispielsweise Schalungsankerstäben kombinieren, wodurch die Kosten für das System als Ganzes gesenkt werden können.

Vorzugsweise weist eine geneigte Gewindeflanke, eine geneigte Flanke der Zwischenwendel und/oder ein Abschnitt der Wendel, der beim Aufspreizen unter Last an der geneigten Gewindeflanke entlanggleitet, eine den Gleitwiderstand verringernde Beschichtung auf. Derartige Beschichtungen können mittels chemischer oder elektrochemischer Verfahren aufgetragen werden, als Lackierung oder durch thermisches Spritzen.

In einer vorteilhaften Ausführungsform gilt für das Verhältnis der Länge $h_{eff}$ des Gewindeabschnitts des Ankers und des Nenndurchmessers $d_b$ des Bohrlochs folgendes:

$h_{eff}/d_b \geq 10.0$, vorzugsweise $\geq 12,0$, besonders vorzugsweise $\geq 15,0$, und insbesondere $\geq 30,0$. Dabei bezeichnet die "Länge des Gewindeabschnitts" die axiale Länge des Teils des Ankers, in dem Gewindegänge vorgesehen sind.

Man beachte, dass zur Einfachheit der Darstellung die Größe "$h_{eff}$" in der vorliegenden Offenbarung sowohl zur Bezeichnung der Länge des Gewindeabschnitts des Ankers, als auch - entsprechend der üblichen Verwendung - zur Bezeichnung der Verankerungstiefe des Ankers bei dessen Gebrauch bezeichnet wird. Der Fachmann versteht, dass die effektive Verankerungstiefe maximal der Länge des Gewindeabschnitts des Ankers entsprechen kann, je nach Untergrund oder Verwendung aber durchaus auch kleiner sein kann. Aus dem Zusammenhang ist jedoch stets klar, ob es sich um die Länge des Gewindeabschnitts des Ankers an sich, oder seine Verankerungstiefe im Gebrauch handelt.

Man beachte, dass gemäß EAD 330232-00-0601 bei Schraubankern in Beton die effektive Verankerungstiefe das achtfache des Nenndurchmessers $d_b$ des Bohrlochs nicht übersteigen darf. Dementsprechend haben bekannte Schraubanker zur Verwendung Beton auch Gewindeabschnitte, deren Länge das achtfache des Nenndurchmessers $d_b$ des Bohrlochs nicht, oder allenfalls nur geringfügig übersteigt. Abweichend hiervon sehen bestimmte Ausführungsformen der Erfindung Systeme vor, bei denen die Länge des Gewindeabschnitts bezogen auf den Nenndurchmesser des Bohrlochs wesentlich größer ist. Man beachte, dass dies sowohl für einteilige, als auch für zweiteilige Anker gilt. Derartige außergewöhnlich lange Anker können insbesondere zum Zwecke der nachträglichen Armierung des mineralischen Befestigungsgrundes, speziell Beton, zum Anschluss eines Betonteils an eine bestehende Betonstruktur oder zur Ausbildung von Übergreifungsstößen verwendet werden.

Nach dem Stand der Technik werden speziell bei der nachträglichen Armierung oder bei der Ausbildung von Übergreifungsstößen, wie sie beispielsweise für Anschlussbewehrungen benötigt werden, entsprechende Ankerstangen in einem aufwändigen Klebe- oder Verbundverfahren im mineralischen Untergrund befestigt. Die hierzu nötigen Arbeitsschritte sind:

- Herstellung des Bohrlochs
- aufwändiges Reinigen des Bohrlochs mit mehrmaligem Spülen und Ausblasen,
- dosiertes Verfüllen mit Mörtel oder Verbundmasse,
- Einbringen der Ankerstange, und
- Aushärten der Verbundmasse über mehrere Stunden.

Der kritische Faktor ist dabei die Herstellung eines gesicherten Verbunds zwischen der Ankerstange und dem Verankerungsgrund. Die Güte des Verbundes ist abhängig von der Reinheit der Oberflächen, der Temperatur und einer möglichst blasenfreien Verbundmasse. Aufgrund der Fehleranfälligkeit dieses Verfahrens darf es nur von ausgebildeten, zertifizierten Personen durchgeführt werden, deren Eignungsnachweis regelmäßig überprüft und nachgewiesen werden muss. Daher ist dieses Verfahren derzeit sehr aufwendig und teuer.

Mit einem erfindungsgemäßen System lässt sich hingegen eine nachträgliche Armierung oder ein Übergreifungsstoß einfach, schnell, zuverlässig und mit wesentlich geringerem Fehlerrisiko als im Stand der Technik ausbilden, ohne dass hierfür spezielles Fachpersonal benötigt würde. Dabei kommt insbesondere zum Tragen, dass durch die Verwendung des Furchwerkzeugs praktisch beliebige Ankerlängen verwendet werden können, weil Gewinde praktisch beliebiger Längen gefurcht werden können, und die Einschraubkraft auch bei großen Längen durch das vorherige Ausbilden des Innengewindes und - in bevorzugten Ausführungsformen - durch die Bearbeitung des Bohrlochs durch die Schneidkanten des Furchwerkzeugs ausreichend gering gehalten werden können. Bei sehr großen Längen bieten vor allem die beschriebenen Ausführungsformen mit zweiteiligem Anker Vorteile, weil die Einschraubkräfte in jedem einzelnen Schritt (d. h. Einsetzen der Wendel, Einschrauben der Schraube/Gewindestange) begrenzt sind, weil geeignete Gewindestangen in sämtlichen benötigten Längen kostengünstig verfügbar sind, und weil sich auch die Wendel vergleichsweise einfach und kostengünstig in den benötigten Längen, quasi "am laufenden Meter" herstellen lässt. Im Gegensatz hierzu lässt sich die Herstellung herkömmlicher Schraubanker, die üblicherweise gewalzt werden und deren Köpfe durch Umformung ausgebildet werden, nicht ohne weiteres auf sehr große Längen übertragen.

Die vorliegende Erfindung betrifft in einem zweiten Aspekt ein Verfahren zum Befestigen eines Ankers mit einem Kernabschnitt und einem Gewindeabschnitt in einem Bohrloch in einem mineralischen Untergrund, mit den folgenden Schritten:

Bohren eines Bohrlochs,
Furchen eines Innengewindes in dem Bohrloch, indem ein Furchwerkzeug in das Bohrloch eingedreht wird, und
Einsetzen des Ankers in das Bohrloch,
wobei das Furchwerkzeug folgendes umfasst:
einen zumindest näherungsweise zylindrischen oder konischen Grundkörper mit einem führenden und einem nachlaufenden Ende, wobei ein Kraftangriff vorgesehen ist, über den ein Drehmoment zum Eindrehen des Furchwerkzeugs in das Bohrloch und zum Furchen des Gewindes auf den Grundkörper übertragen wird, wobei der Grundkörper eine Außenfläche hat, auf der ein Furchgewinde ausgebildet ist, welches geeignet ist, das Innengewinde in die Wand des Bohrlochs zu furchen. Dabei weist das Furchwerkzeug an seinem führenden Ende ein Antriebselement auf, welches geeignet ist, mit einem Kraftangriff des Ankers oder eines Teils desselben zusammenzuwirken, und wobei der Anker bzw. der Teil desselber im genannten Schritt des Einsetzens des Ankers in das Bohrloch mithilfe des Antriebselements in das mit dem Furchwerkzeug behandelte Bohrloch eingeschraubt wird.

In einer vorteilhaften Ausrufung des Verfahrens ist das Antriebselement ein Mehrkant- oder ein Sechsrundantrieb.

In einer vorteilhaften Ausführungsform des Verfahrens umfasst das Einsetzen des Ankers in das Bohrloch die folgenden Schritte:

-    Bringen des Antriebselements des Furchwerkzeugs und des Kraftangriffs des Ankers oder des Teils desselben in eine Eingriffsstellung, in der die relative Ausrichtung des Furchwerkzeugs und des Ankers oder des genannten Teils desselben derart festgelegt ist, dass das Furchgewinde auf einer gedachten Fortsetzung des Gewindes des Ankers liegt,
-    Drehen des Furchwerkzeugs in Einschraubrichtung, wobei ein Drehmoment von dessen Antriebselement auf den Kraftangriff des Ankers oder des Teils desselben übertragen wird, um den Anker oder den Teil desselben in das Bohrloch einzuschrauben, bis der Anker oder Teil des Ankers sich vollständig und das Furchwerkzeug sich zumindest teilweise in dem Bohrloch befindet,
-    Drehen des Furchwerkzeugs entgegen der Einschraubrichtung, um es aus dem Bohrloch herauszudrehen, wobei es kein Drehmoment von seinem Antriebselement auf den Kraftangriff des Ankers oder des Teils desselben überträgt.

In einer vorteilhaften Ausführungsform weist das Antriebselement des Furchwerkzeugs eine erste Anschlagsfläche auf, deren Flächennormale **n** mit einem Tangentialvektor **t** einen Winkel von maximal 45°, vorzugweise maximal 30° und besonders vorzugsweise maximal 15° bildet, wobei der Tangentialvektor t definiert ist als Vektorprodukt aus einem Axialvektor **a,** der in Richtung auf das vorlaufende Ende des Furchwerkzeugs gerichtet ist, und einem Radialvektor **r,** dessen Spitze auf der ersten Anschlagsfläche (80) liegt, sodass gilt: **t = a x r,** und wobei der Kraftangriff des Ankers oder des genannten Teils desselben eine erste Anschlagsfläche aufweist, die an der ersten Anschlagsfläche des Antriebselements anliegt, wenn das Antriebselement und der Kraftangriff die Eingriffsstellung einnehmen.

In einer vorteilhaften Ausführungsform des Verfahrens weist das Antriebselement des Furchwerkzeugs eine zweite Anschlagsfläche auf, deren Flächennormale eine Komponente in Richtung des Axialvektors **a** hat, und der Kraftangriff des Ankers oder des genannten Teils desselben hat eine zweite Anschlagsfläche, die an der zweiten Anschlagsfläche des Antriebselements anliegt, wenn das Antriebselement und der Kraftangriff die Eingriffsstellung einnehmen.

In einer vorteilhaften Ausführungsform des Verfahrens hat das Antriebselement einen axialen Vorsprung und der Kraftangriff des Ankers eine Aufnahme, in der der axiale Vorsprung zumindest teilweise aufgenommen wird, wenn das Antriebselement und der Kraftangriff in die Eingriffsstellung gebracht werden.

In einer vorteilhaften Ausführungsform des Verfahrens wird der Anker durch eine Gewindehülse oder der Teil des Ankers durch eine Wendel gebildet, und wird die Aufnahme zum Aufnehmen des axialen Vorsprung durch den Innenraum der Gewindehülse bzw. der Wendel gebildet.

In einer vorteilhaften Ausführungsform sind auf der Außenfläche des Grundkörpers eine Mehrzahl von Erhebungen ausgebildet, die jeweils eine Schneidkante aufweisen, wobei sämtliche Schneidkanten zumindest abschnittsweise auf einem gedachten Zylinder mit einem Durchmesser $d_o$ liegen. Ferner wird mithilfe der Schneidkanten beim Eindrehen des Furchwerkzeugs in das Bohrloch die Innenwand des Bohrlochs zumindest teilweise abgetragen, um die Innenwand des Bohrlochs dem gedachten Zylinder anzupassen.

Vorzugsweise hat der Anker einen Kerndurchmesser $d_K$, wobei gilt:

$$0{,}0 \text{ mm} \leq d_o - d_K \leq 0{,}7 \text{ mm, vorzugsweise } 0{,}1 \text{ mm} \leq d_o - d_K \leq 0{,}5 \text{ mm.}$$

Vorzugsweise hat der Anker einen Kerndurchmesser $d_K$, hat das Gewinde des Ankers einen Außendurchmesser $d_G$, und hat das Furchgewinde des Furchwerkzeugs einen maximalen Durchmesser $d_F$, wobei gilt:

$$0{,}0 \leq (d_F - d_G)/ d_K \leq 0{,}15, \quad \text{vorzugsweise } 0{,}025 \leq (d_F - d_G)/ d_K \leq 0{,}10.$$

In einer vorteilhaften Ausführungsform hat das Furchwerkzeug, vorzugsweise auf der dem nachlaufenden Ende näheren Seite des Furchgewindes, ein ringförmiges Abstreifelement, wobei beim Eindrehen und/oder Ausdrehen des Furchwerkzeugs mithilfe des ringförmigen Abstreifelements Bohrmehl von der Bohrlochwand abgestreift wird.

Vorzugsweise wird der Anker durch eine Schraube oder Gewindestange gebildet, bei der der genannte Gewindeabschnitt kraft-, stoff- oder formschlüssig mit dem genannten Kernabschnitt verbunden ist, wobei die Schraube bzw. Gewindestange vorzugsweise zumindest überwiegend aus korrosionsfestem Stahl, Nichteisenmetall, insbesondere Aluminium oder Kunststoff, insbesondere faserverstärktem Kunststoff besteht.

In einer vorteilhaften Ausführungsform des Verfahrens wird der Anker durch eine Gewindehülse gebildet, die ein Außengewinde aufweist, das den genannten Gewindeabschnitt bildet, wobei die Gewindehülse vorzugsweise ein Innengewinde, insbesondere ein metrisches Innengewinde aufweist, und/oder wobei die Gewindehülse vorzugsweise aus einem Profilband gewickelt ist, das eine radial innere und eine radial äußere Seite hat, wobei auf der radial äußeren Seite ein Gewindegrat ausgebildet ist, der geeignet ist, in das mithilfe des Furchwerkzeugs gefurchte Innengewinde im Bohrloch eingeschraubt zu werden, und/oder wobei die Gewindehülse zumindest überwiegend aus korrosionsfestem Stahl, Nichteisenmetall, insbesondere Aluminium oder Kunststoff, insbesondere faserverstärktem Kunststoff besteht.

In einer vorteilhaften Ausführungsform des Verfahrens ist der Anker mindestens zweiteilig ausgebildet, wobei der mindestens zweiteilige Anker folgendes umfasst:

eine Wendel, die in das mithilfe des Furchwerkzeugs gefurchte Innengewinde im Bohrloch einschraubbar ist, wobei die Wendel vorzugsweise durch ein gewickeltes Profilband gebildet ist, das eine radial innere und eine radial äußere Seite hat, wobei auf der radial äußeren Seite ein Gewindegrat ausgebildet ist, der geeignet ist, in das mithilfe des Furchwerkzeugs gefurchte Innengewinde im Bohrloch eingeschraubt zu werden, und eine Schraube oder Gewindestange, mit einem Außengewinde, das in die Wendel einschraubbar ist, wobei die Gewindestange insbesondere durch einen Schalungsankerstab gebildet wird. Zusätzlich oder alternativ hat die Schraube oder Gewindestange vorzugsweise ein im Querschnitt rechteckiges oder trapezförmiges Gewinde, mit einer abgeflachten Gewindespitze, die den genannten Kernabschnitt des zweiteiligen Ankers bildet. Dabei umfasst das genannte Einsetzen des Ankers in das Bohrloch folgendes:

Einschrauben der Wendel in das mithilfe des Furchtwerkzeugs gefurchte Innengewinde im Bohrloch, und Einschrauben der Schraube oder Gewindestange in die Wendel.

In einer vorteilhaften Ausführungsform des Verfahrens hat das Außengewinde der Schraube bzw. Gewindestange, oder eine zwischen der Schraube bzw. Gewindestange und der Wendel angeordnete zusätzlich vorgesehene Zwischenwendel mindestens eine geneigte Flanke, die geeignet ist, die Wendel bei Zugbelastungen in einer Richtung aus dem Bohrloch heraus und/oder bei Druckbelastungen in Richtung in das Bohrloch hinein radial aufzuspreizen, wobei die mindestens eine geneigte Flanke mit der Radialrichtung einen Winkel von mindestens 30°, vorzugsweise von mindestens 45° bildet.

Zusätzlich oder alternativ liegt ein Haftreibungskoeffizient $\mu_H$ zwischen der mindestens einen geneigten Flanke der Schraube bzw. Gewindestange oder Zwischenwendel und dem Abschnitt der Wendel, der bei der genannten Zug- bzw Druckbelastung an der geneigten Flanke entlanggleiten kann, in einem Bereich von $0,05 \leq \mu_H \leq 0,50$, wobei weiter vorzugsweise gilt: $0,075 \leq \mu_H$, vorzugsweise $0,125 \leq \mu_H$ und/oder $\mu_H \leq 0,25$, vorzugsweise $\mu_H \leq 0,20$.

Zusätzlich oder alternativ weist die mindestens eine geneigte Gewindeflanke, die geneigte Flanke der Zwischenwendel und/oder ein Abschnitt der Wendel, der beim Aufspreizen unter Last an der geneigten Flanke entlanggleitet, eine den Gleitwiderstand verringernde Beschichtung auf.

In einer besonders vorteilhaften Ausführungsform des Verfahrens wird der Anker mit einer effektiven Verankerungstiefe $h_{eff}$ in das Bohrloch eingesetzt, wobei für das Verhältnis der effektiven Verankerungstiefe $h_{eff}$ und den Nenndurchmesser $d_b$ des Bohrlochs folgendes gilt:

$h_{eff}/d_b \geq 10.0$, vorzugsweise $\geq 12,0$, besonders vorzugsweise $\geq 15,0$, und insbesondere $\geq 30,0$.

In sämtlichen der beschriebenen Ausführungsformen des Verfahrens kann ein System nach einer der oben beschriebenen Ausführungsformen zur Anwendung kommen.

Ein weiterer Aspekt der Erfindung betrifft ein Verfahren zum Armieren eines mineralischen Befestigungsgrundes, insbesondere von Beton, oder zum Ausbilden eines Übergreifungsstoßes in dem mineralischen Befestigungsgrund, insbesondere Beton, mithilfe eines Ankers, bei dem ein Verfahren zum Befestigen eines Ankers im Befestigungsgrund nach einer der vorstehend beschriebenen Ausführungsformen zur Anwendung kommt. Dabei kann der Übergreifungsstoß insbesondere zum Zwecke einer Anschlussbewehrung ausgebildet werden, wie sie unten näher erläutert wird.

Ein weiterer Aspekt der vorliegenden Erfindung betrifft ein Furchwerkzeug zum Furchen eines Innengewindes in einem Bohrloch, das in einem mineralischen Verankerungsgrund ausgebildet ist, wobei das Furchwerkzeug folgendes umfasst:

einen zumindest näherungsweise zylindrischen oder konischen Grundkörper mit einem führenden und einem nachlaufenden Ende, wobei ein Kraftangriff vorgesehen ist, über den ein Drehmoment zum Eindrehen des Furchwerkzeugs in das Bohrloch und zum Furchen des Gewindes auf den Grundkörper übertragbar ist, mit einer Außenfläche, auf der ein Furchgewinde ausgebildet ist, welches geeignet ist, ein Innengewinde in die Wand des Bohrlochs zu furchen. Dabei weist das Furchwerkzeug an seinem führenden Ende ein Antriebselement auf, welches geeignet ist, mit einem Antriebselement eines Ankers zusammenzuwirken, der in ein mit dem Furchwerkzeug behandeltes Bohrloch einzuschrauben ist, wobei das Antriebselement ein Sechskant- oder ein Sechsrundantrieb ist.

Vorzugsweise sind auf der Außenfläche des Grundkörpers eine Mehrzahl von Erhebungen ausgebildet, die jeweils eine Schneidkante aufweisen, wobei sämtliche Schneidkanten zumindest abschnittsweise auf einem gedachten Zylinder liegen, und geeignet sind, beim Eindrehen des Furchwerkzeugs in das Bohrloch die Innenwand des Bohrlochs zumindest teilweise abzutragen, um das Bohrloch dem gedachten Zylinder anzupassen.

Vorzugsweise ist das Furchwerkzeug zur Verwendung als Teil eines Systems nach einer der oben beschriebenen Ausführungsformen geeignet.

KURZBESCHREIBUNG DER FIGUREN

| | |
|---|---|
| Fig. 1a - 1e | zeigen verschiedene Ansichten einer ersten Ausführungsform eines Furchwerkzeugs, |
| Fig. 2a - 2d | zeigen verschiedene Ansichten einer zweiten Ausführungsform eines Furchwerkzeugs, |
| Fig. 3 | zeigt die Bestandteile eines zweiteiligen Ankers, |
| Fig. 4 | zeigt eine Seitenansicht und eine Schnittansicht eines zweiteiligen Ankers im zusammengesetzten Zustand, |
| Fig. 5 | zeigt eine Seitenansicht und eine Schnittansicht eines weiteren zweiteiligen Ankers im zusammengesetzten Zustand, |
| Fig. 6 | zeigt eine Seitenansicht und eine Schnittansicht eines weiteren zweiteiligen Ankers bestehend aus einer Schraube und einer Wendel im zusammengesetzten Zustand, wobei die Schraube eine stark geneigte Flanke umfasst, die geeignet ist, die Wendel bei Zugbelastung aufzuspreizen, |
| Fig. 7 | zeigt eine Seitenansicht, eine Schnittansicht sowie einen vergrößerten Ausschnitt der Schnittansicht eines weiteren zweiteiligen Ankers, der zusätzlich zu einer Schraube und einer Wendel eine Zwischenwendel mit einer geneigten Flanke umfasst, die geeignet ist, die Wendel bei Zugbelastung aufzuspreizen, |
| Fig. 8 | zeigt eine Seitenansicht und eine Schnittansicht einer monolithischen Gewindehülse mit Rastelementen zum Ausbilden einer Rastverbindung, |
| Fig. 9 | zeigt eine Seitenansicht und eine Schnittansicht einer gewickelten Gewindehülse mit Rastelementen zum Ausbilden einer Rastverbindung, und |

Fig. 10        zeigt eine Abfolge von Schnittansichten der Gewindehülse von Fig. 8, in die ein Anschlussstück eingerastet wird,

Fig. 11        zeigt eine schematische Schnittansicht einer Anschlussbewehrung, die mithilfe eines zweiteiligen Ankers ausgeführt ist,

Fig. 12        zeigt eine schematische Schnittansicht einer Anschlussbewehrung, die mithilfe einer Gewindestange
               mit Betonschraubengewinde ausgeführt ist,

Fig. 13        zeigt eine Seitenansicht eines Furchwerkzeugs mit Antriebselement, welches es gestattet, einen Anker
               oder Teil eines Ankers vollständig im Befestigungsgrund zu versenken,

Fig. 14        zeigt eine perspektivische Ansicht des Furchwerkzeugs von Fig. 13,

Fig. 15        zeigt eine Seitenansicht des Furchwerkzeugs von Fig. 13 und 14, welches sich mit einer Wendel eines
               zweiteiligen Ankers in einer Eingriffsstellung befindet,

Fig. 16        zeigt eine ähnliche Seitenansicht wie Fig. 15, jedoch in einer Situation, in der das Furchwerkzeug die
               Eingriffsstellung verlassen hat.

## BESCHREIBUNG DER BEVORZUGTEN AUSFÜHRUNGSFORMEN

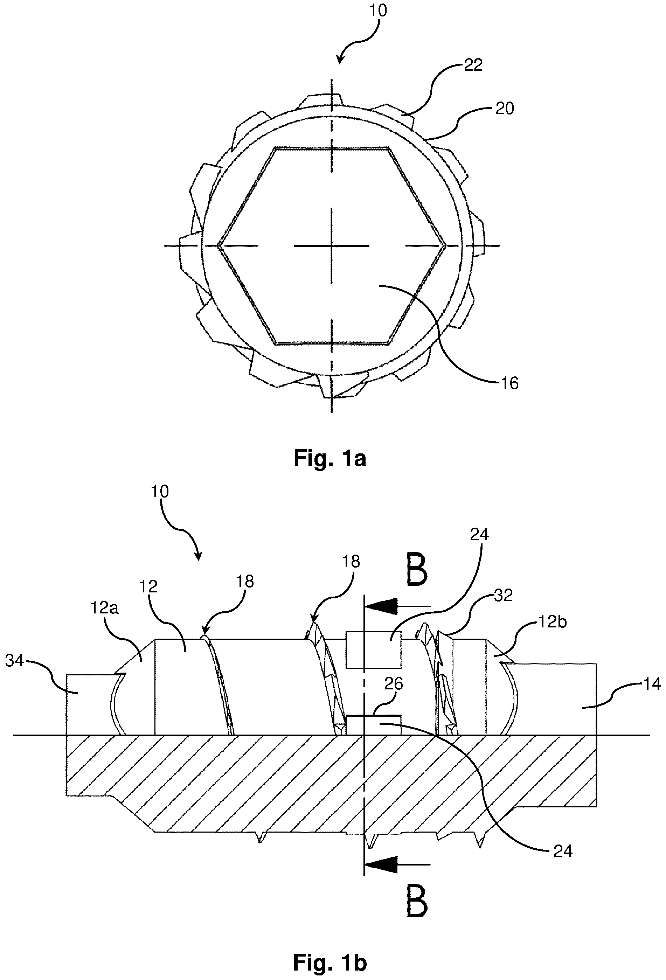

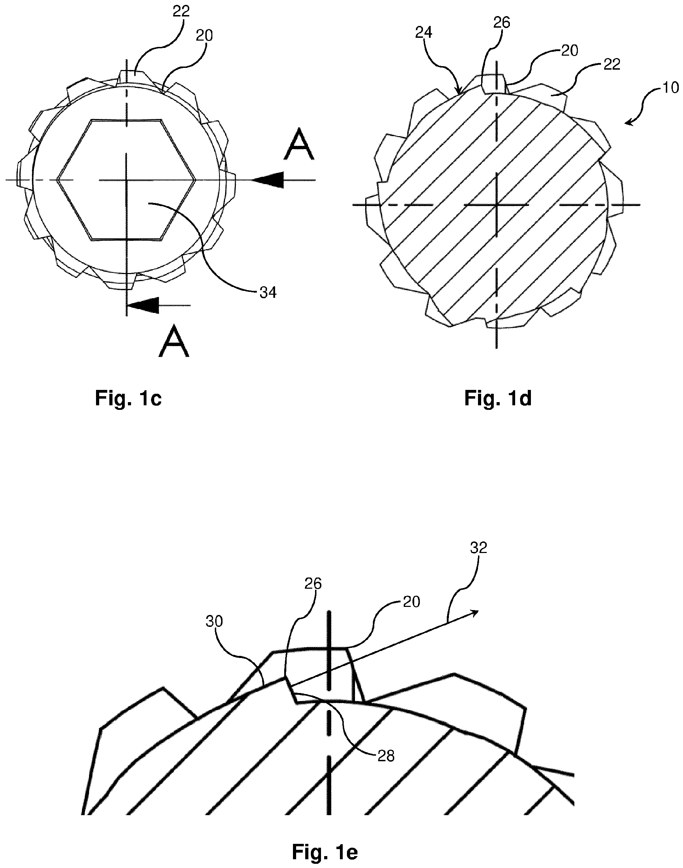

In Fig. 1a-1e (zusammenfassend auch als "Fig. 1 " bezeichnet) sind verschiedene Ansichten eines Furchwerkzeugs 10 nach einer ersten Ausführungsform gezeigt. Fig. 1b zeigt dabei eine teilweise geschnittene Seitenansicht, Fig. 1c eine Ansicht auf das beim Eindrehen führende, in der Darstellung von 1b linke Ende, Fig. 1a eine Draufsicht auf das beim Einschrauben nachlaufende, in Ansicht von Fig. 1b rechte Ende und Fig. 1d eine Querschnittsansicht in Richtung der Pfeile B in Fig. 1b. Fig. 1e zeigt einen vergrößerten Ausschnitt von Fig. 1d.

Das Furchwerkzeug 10 hat einen näherungsweise zylindrischen Grundkörper (s. Fig. 1b) mit einem führenden Ende 12a und einem nachlaufenden Ende 12b. Am nachlaufenden Ende 12b ist ein Kraftangriff 14 angebracht, bei dem es sich um eine Aufnahme 16 (s. Fig. 1a) zum Aufnehmen eines Sechskantwerkzeugs handelt. Mit diesem Sechskantwerkzeug kann ein Drehmoment zum Eindrehen des Furchwerkzeugs 10 in ein Bohrloch (nicht gezeigt) zum Furchen eines Innengewindes im Bohrloch auf den Grundkörper 12 übertragen werden. Das Sechskantwerkzeug könnte dann mit seinem anderen Ende in das Futter einer Bohrmaschine eingespannt werden, um mit Hilfe der Bohrmaschine eingedreht zu werden. Anstelle des Kraftangriffs 16 zur Aufnahme eines Sechskantwerkzeugs könnte am nachlaufenden Ende 14 auch ein Schaft dauerhaft befestigt sein, der direkt in das Bohrfutter einer Bohrmaschine eingespannt werden könnte und der ebenfalls als "Kraftangriff" im Sinne der Erfindung angesehen würde. Der Kraftangriff muss nicht notwendigerweise am nachlaufenden Ende 12b vorgesehen sein, aber er sollte zumindest von der nachlaufenden Seite (d.h. von außerhalb des Bohrlochs) zugängig sein. Der Vorteil der hier gezeigten Ausführungsform besteht jedoch darin, dass das Furchwerkzeug 10 für Bohrlöcher beliebiger Tiefe eingesetzt werden kann, und jeweils nur das passende Sechskantwerkzeug gewählt zu werden braucht.

An der Außenfläche des Grundkörpers 10 ist ein Furchgewinde 18 ausgebildet, das in der gezeigten Ausführungsform weniger als drei komplette Windungen hat. Durch die vergleichsweise geringe Anzahl von Windungen des Furchgewindes 18 können die Eindrehkräfte beschränkt werden. Der Außendurchmesser des Furchgewindes 18 nimmt, wie speziell in Fig. 1b zu erkennen ist, in Richtung auf das führende Ende 12a ab. In dem Furchgewinde 18 sind Ausnehmungen 20 ausgebildet, und zwischen benachbarten Ausnehmungen 20 sind Schneidezähne 22 gebildet. Die Ausnehmungen 20 entsprechen dabei der jeweiligen Höhe des Furchgewindes 18, so dass das Furchgewinde 18 abschnittsweise unterbrochen ist. In alternativen Ausführungsformen müssen die Ausnehmungen 20 jedoch nicht ganz bis zu der Oberfläche des Grundkörpers 12 reichen.

Auf der Außenfläche des Grundkörpers 12 sind in der Ausführungsform von Fig. 1 fünf Erhebungen 24 ausgebildet, die jeweils eine Schneidkante 26 haben. Die Erhebungen 24 haben eine "Rippenform", die in Fig. 1e besonders gut zu erkennen ist. Wie in Fig. 1e zu erkennen ist, wird die Schneidkante 26 durch eine Kante gebildet, an der eine "im wesentlichen radiale Fläche" 28 und eine "im wesentlichen tangentiale Fläche" 30 aneinanderstoßen. Dabei zeigt die Flächennormale 32 der im wesentlichen radialen Fläche 28 in Einschraubrichtung, genauer in Drehrichtung beim Einschrauben. Die "im wesentlichen radiale Fläche" 28 ist eine Fläche, die zumindest annähernd senkrecht zur Bohrlochwand gerichtet ist, und genauer gesagt eine Fläche, die um weniger als 30°, vorzugsweise weniger als 15° gegenüber der Radialrichtung geneigt ist. Die "im wesentlichen tangentiale Fläche" 30 hingegen ist eine Fläche, die zumindest eher parallel zu der Bohrlochwand als senkrecht zu dieser ist. Genauer ist sie eine Fläche, die gegenüber der Radialrichtung um mindestens 45° geneigt ist.

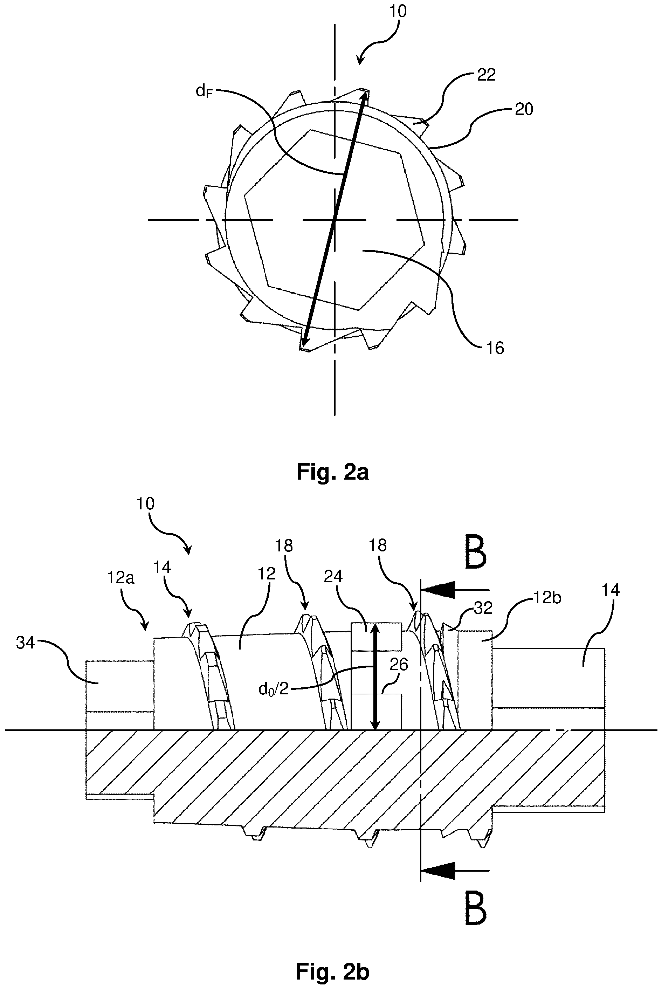

Die Schneidkanten 26 der Erhebungen 24 liegen sämtlich zumindest abschnittsweise auf einem gedachten Zylinder mit einem Durchmesser $d_o$. Der halbe Durchmesser $d_{o/2}$ dieses gedachten Zylinders ist in der Ausführungsform von Fig. 2b eingezeichnet. Die Schneidkanten 26 sind dazu geeignet, beim Eindrehen des Furchwerkzeugs 10 in das Bohrloch die Innenwand des Bohrlochs zumindest teilweise abzutragen, um die Innenwand des Bohrlochs dem gedachten Zylinder anzupassen. Anschaulich gesprochen wird mit Hilfe der Erhebungen 24 das Bohrloch, welches aufgrund seiner Herstellung mit einer Schlagbohrmaschine eine helixartige Form hat, durch einen mahlenden Abtragungsprozess durch die Schneidkanten 26 der Erhebungen 24 einer Zylinderform mit einem vorbestimmten Durchmesser $d_o$ angepasst. Dies ermöglicht es, einen Anker mit einem vergleichsweise großen Kerndurchmesser zu verwenden, der praktisch überall (und nicht nur stellenweise, wie bei einem nicht behandelten Bohrloch) dicht an der Bohrlochwand anliegt, ohne dass die Reibkräfte zwischen der Bohrlochwand und dem Ankerkern beim Eindrehen übermäßig ansteigen. Insgesamt kann dadurch das Volumen zwischen der Bohrlochwand und dem Ankerkern über die gesamte Länge des Ankers wesentlich verringert werden, wodurch die Stützwirkung der Betonkonsole und damit die Tragfähigkeit wesentlich erhöht werden kann.

Man beachte, dass die Erhebungen 24 zwischen zwei Windungen des Furchgewindes 18 angeordnet sind. Zwar wäre es grundsätzlich auch möglich, die Erhebungen 24 am vorlaufenden Ende 12a des Grundkörpers 12 vorzusehen, die gewählte Ausführungsform gestattet aber eine bessere Führung der Schneidkanten entlang der Mantelfläche des gedachten Zylinders und letztlich eine bessere Qualität des behandelten Bohrlochs.

Im Bereich des nachlaufenden Endes 12b ist ein ringförmiges Abstreifelement 32 vorgesehen, mit dem Bohrmehl von der Bohrlochwand abgestreift werden kann. Im Stand der Technik wird das Bohrmehl bisweilen als nützlich angesehen, um die Zwischenräume zwischen Kern und Betonmatrix zu verfüllen und dadurch eine Stützwirkung zu erzeugen. Bei der gezeigten Ausführungsform wird jedoch ein anderer Weg eingeschlagen. Hier wird das Bohrmehl weitestgehend aus dem Verbund ferngehalten, und stattdessen wird die Stützwirkung durch einen geringen Abstand zwischen dem Kern des Ankers und der noch unverletzten Betonmatrix bewirkt.

Schließlich ist am vorlaufenden Ende 12a des Grundkörpers 12 ein Antriebselement 34 vorgesehen (s. insbesondere Fig. 1c), das dazu bestimmt ist, mit einem Antrieb eines zugehörigen Ankers (nicht gezeigt) zusammenzuwirken. Dies erleichtert den Vorgang des Setzens des Ankers, weil zwischen dem Furchen des Gewindes und dem Einsetzen des Ankers das Werkzeug nicht gewechselt zu werden braucht.

Das in Fig. 1 gezeigte Furchwerkzeug lässt sich durch Umformung kostengünstig herstellen. Das Furchwerkzeug wird nach der Umformung gehärtet, um insgesamt, zumindest aber in seinem Furchgewinde 18 und den Erhebungen 24 eine Rockwellhärte von mindestens 55 HRC, vorzugsweise mindestens 60 HRC zu erhalten.

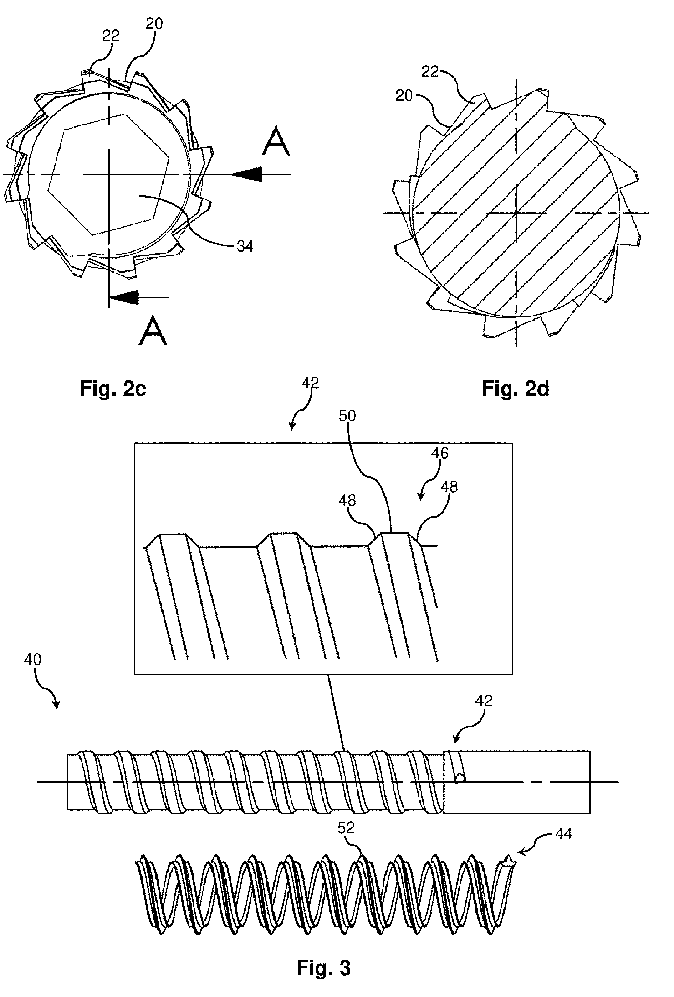

Fig. 2 zeigt eine alternative Ausführungsform eines Furchwerkzeugs 10, dessen Aufbau im wesentlichen demjenigen von Fig. 1 entspricht, und dessen Bestandteile daher mit denselben Bezugzeichen bezeichnet sind. Eine erneute detaillierte Beschreibung kann daher weggelassen werden. Das in Fig. 2 gezeigte Furchwerkzeug 10 ist in einem zerspanenden Verfahren herzustellen, was größere Freiheitsgrade bei der Ausbildung der Details erlaubt, gleichzeitig aber die Kosten erhöht. Während bei der Ausführungsform von Fig. 1 der Grundkörper 12 zylindrisch war, um die Herstellung in einem Walzverfahren zu gestatten, ist der Grundkörper bei dem Furchwerkzeug von Fig. 2 leicht konisch. Man beachte, dass in Fig. 2a der Außendurchmesser $d_F$ des Furchgewindes 18 des Furchwerkzeugs 10 gezeigt ist.

Fig. 3 zeigt einen zweiteiligen Anker 40, bestehend aus einer Gewindestange 42 und einer Wendel 44. Die Gewindestange 42 wird in diesem Fall durch einen Schalungsankerstab mit einem sogenannten $B_{15}$-Gewinde gebildet, wie er von der Firma BETOmax kommerziell erhältlich ist. Derartige Gewindestangen sind in quasi beliebigen Längen preisgünstig erhältlich. Fig. 3 zeigt auch einen vergrößerten Abschnitt des Gewindes der Gewindestange 42. Wie darin zu sehen ist, hat die Gewindestange 42 ein Gewinde 46, mit zwei Gewindeflanken 48, die gegenüber der Radialrichtung jeweils um 45° geneigt sind. Ferner ist das Gewinde im Querschnitt trapezförmig und hat eine abgeflachte Gewindespitze 50.

Die Wendel 44 ist durch ein gewickeltes Profilband gebildet, das eine radial innere und eine radial äußere Seite hat, wobei auf der radial äußeren Seite ein Gewindegrat 52 ausgebildet ist. Das Profilband kann in einem kostengünstigen Walzprozess hergestellt werden, wobei aufgrund des vorgefurchten Innengewindes im Bohrloch (nicht gezeigt) keine besonderen Anforderungen an die Härte des Gewindegrats 52 gestellt werden. Die Wendel 44 kann daher kostengünstig und in praktisch beliebigen Längen herstellt werden. Man beachte, dass die Seitenränder des Profilbandes abgeschrägt sind, so dass sie dieselbe Neigung aufweisen, wie die Flanken 48 des Gewindes 46 der Gewindestange 42.

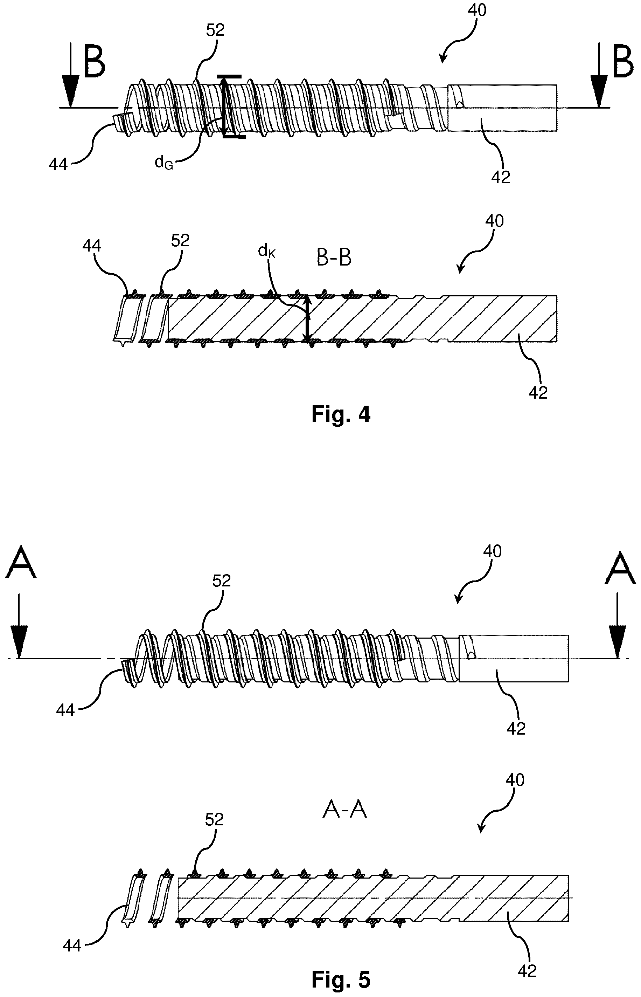

Zum Setzen des zweiteiligen Ankers 40 wird zunächst ein Loch in einen mineralischen Untergrund gebohrt, und mit Hilfe des Furchwerkzeugs 10, wie es in Fig. 1 und 2 gezeigt ist, ein Innengewinde in dem Bohrloch gefurcht. Gleichzeitig wird die Bohrlochwand durch die Erhebungen 24 bearbeitet, sodass das Bohrloch einer idealen Zylinderform zumindest angenähert wird. Nachfolgend wird die Wendel 44 in das Bohrloch eingeschraubt, wobei der Gewindegrat 52 in das gefurchte Innengewinde im Bohrloch eingreift. Zu diesem Zweck ist die Steigung der Wendel 44 an die Steigung des Furchgewindes 18 des Furchwerkzeugs 10 angepasst. Schließlich wird die Gewindestange 42 in die im Bohrloch befindliche Wendel 44 eingeschraubt. Dies ist in Fig. 4 gezeigt.

Wie Fig. 4 zu entnehmen ist, ist das die Wendel 44 bildende Profilband in seiner Breite, Dicke und Formgebung (speziell im Hinblick auf die abgeschrägten Kanten) so ausgebildet, dass es die Zwischenräume zwischen den Gewindegängen des Gewindes 46 ausfüllt. In diesem Fall bilden somit die radial äußere Seite des Profilbandes und die abgeflachte Gewindespitze 50 gemeinsam den Kern bzw. "Kernabschnitt" des zweiteiligen Ankers, und an dessen Durchmesser $d_K$ (siehe Fig. 4) ist der Durchmesser $d_o$ des gedachten Zylinders angepasst, auf dem die Schneidkanten 26 des zum Furchen verwendeten Furchwerkzeugs liegen. Das Gewinde bzw. der "Gewindeabschnitt" des zweiteiligen Ankers 40 wird durch den Gewindegrat 52 gebildet und hat einen Außendurchmesser $d_G$, der ebenfalls in Fig. 4 eingezeichnet ist.

Man beachte, dass der zweiteilige Anker 40 durch die räumliche Trennung der Wendel 44 und der Gewindestange 42 die Fähigkeit hat, sich im Bohrloch unter Last "nachzuspreizen". Wenn unter Last eine axiale Kraft auf die Wendel 44 wirkt, so hat diese die Neigung, an der jeweiligen Gewindeflanke 48 des Gewindes 46 der Gewindestange 42 hochzugleiten, sich also dabei nach radial außen zu bewegen. Auf diese Weise kann der zweiteilige Anker durch Aufspreizen einer Vergrößerung des Bohrlochs durch Rissbildung zu gewissem Grad folgen.

Hierfür ist es förderlich, wenn die Haftreibung zwischen der Wendel 44 und der Gewindestange 42 vergleichsweise gering ist, so dass der Gewindegrat 52 der Wendel 44 zu allen Zeiten in engem Kontakt mit dem mineralischen Untergrund bleibt, und die Relativbewegung nur zwischen der Wendel 44 und der Gewindestange 42 stattfindet. Zu diesem Zweck ist die Wendel 44 in bevorzugten Ausführungsformen auf ihrer radial inneren Seite und an den abgeschrägten Kanten mit einer Gleitschicht beschichtet, die den Haftreibungskoeffizienten $\mu_H$ absenkt. Vorzugsweise liegt der Haftreibungskoeffizienten einem Bereich $0{,}05 \leq \mu_H \leq 0{,}50$, wobei weiter vorzugsweise gilt: $0{,}075 \leq \mu_H$, vorzugsweise $0{,}125 \leq \mu_H$ und/oder $\mu_H \leq 0{,}25$, vorzugsweise $\mu_H \leq 0{,}20$.

Fig. 5 zeigt eine nahe verwandte Ausführungsform eines zweiteiligen Ankers 40, mit dem Unterschied, dass das Profilband schmaler ausgebildet ist, als in der Ausführungsform von Fig. 4. Dies hat zur Folge, dass die gestattete Relativbewegung zwischen Gewindestange 42 und Wendel 44, und damit die Anpassung an Rissbildung im Beton gesteigert ist.

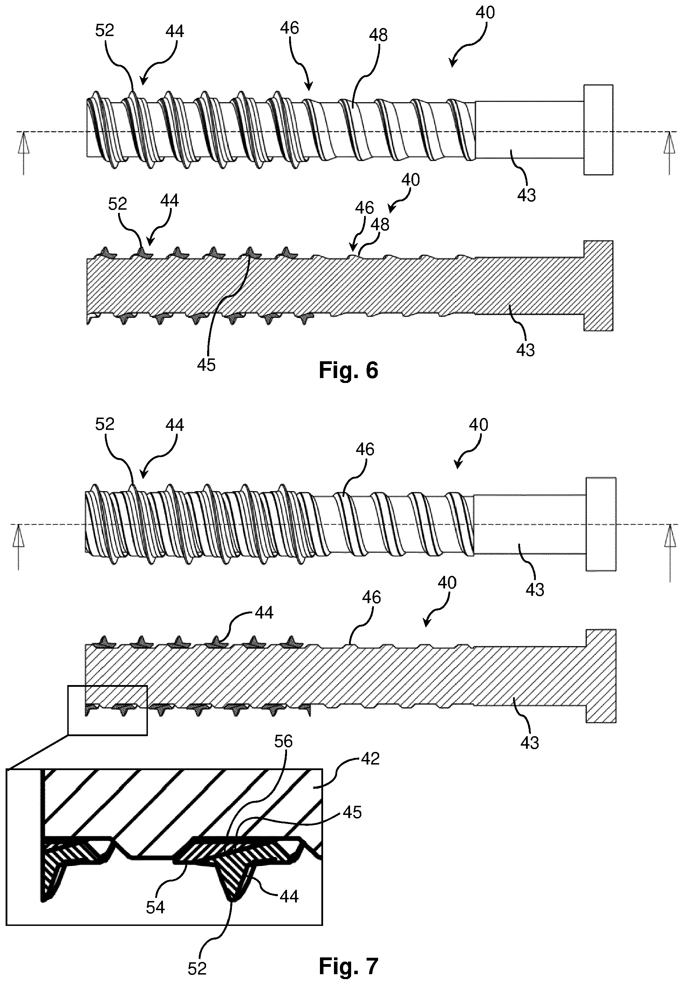

Fig. 6 zeigt eine Seitenansicht und eine Schnittansicht eines weiteren zweiteiligen Ankers 40 bestehend aus einer Schraube 43 und einer Wendel 44 im zusammengesetzten Zustand, wobei die Schraube 43 eine Gewinde 46 hat, das auf seiner in Einschraubrichtung rückwärtigen Seite eine stark geneigte Flanke 48 hat, deren Neigung bezogen auf die Radialrichtung 45° deutlich übersteigt. Derartig stark geneigte Flanken, mit Neigungswinkeln in Bezug auf die Radialrichtung von 55° oder mehr, vorzugsweise 60° oder mehr und besonders vorzugsweise 65° oder mehr sind zum Aufspreizen besonders gut geeignet. Man beachte, dass die Wendel 44 an diese stark geneigte Gewindeflanke 48 angepasst ist. Konkret hat die Wendel 44 eine geneigte Auflagefläche 45, die zumindest näherungsweise denselben Winkel zur radialen Richtung hat, wie die stark geneigte Flanke 48 des Gewindes 46 der Schraube 43.

Fig. 7 zeigt eine Seitenansicht, eine Schnittansicht sowie einen vergrößerten Ausschnitt der Schnittansicht eines weiteren zweiteiligen Ankers, der zusätzlich zu einer Schraube 43 und einer Wendel 44 eine Zwischenwendel 54 mit einer geneigten Flanke 56 umfasst, die geeignet ist, die Wendel 44 bei Zugbelastung aufzuspreizen. Man beachte, dass in der vorliegenden Offenbarung ein "zweiteiliger Anker" stets ein Anker ist, der aus mindestens zwei Teilen besteht, aber durchaus auch weitere Teile, wie im gezeigten Fall die Zwischenwendel 54 enthalten kann. Die Funktion der Zwischenwendel 54 besteht darin, die geneigte Flanke 56 bereitzustellen, sodass die Schraube 43 oder alternativ eine Gewindestange 42 ihrerseits nicht eine derartige stark geneigte Flanke 48 aufzuweisen braucht. Auf diese Weise können Schrauben 43 oder Gewindestangen 42 mit Standard-Gewinden verwendet werden, wie beispielsweise dem oben genannten B15-Gewinde. Wenn der zweiteilige Anker von Fig. 7 auf Zug belastet wird, geleitet die Auflagefläche 45 der Wendel 44 auf der geneigten Fläche bzw. Flanke 56 der Zwischenwendel 54 in Richtung auf die das führende Ende der Schraube 43, wodurch die Wendel 44 als Ganzes aufgespreizt wird.

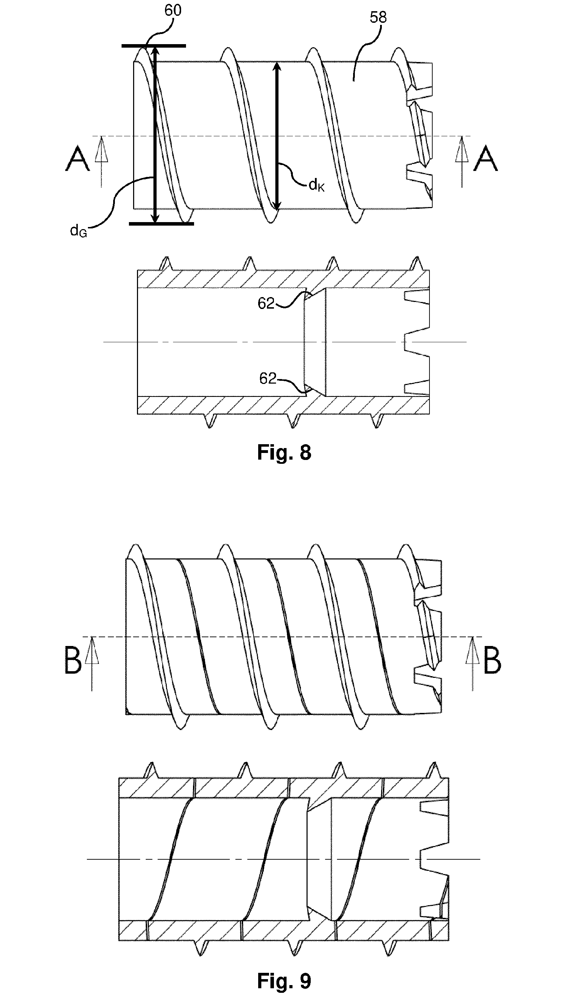

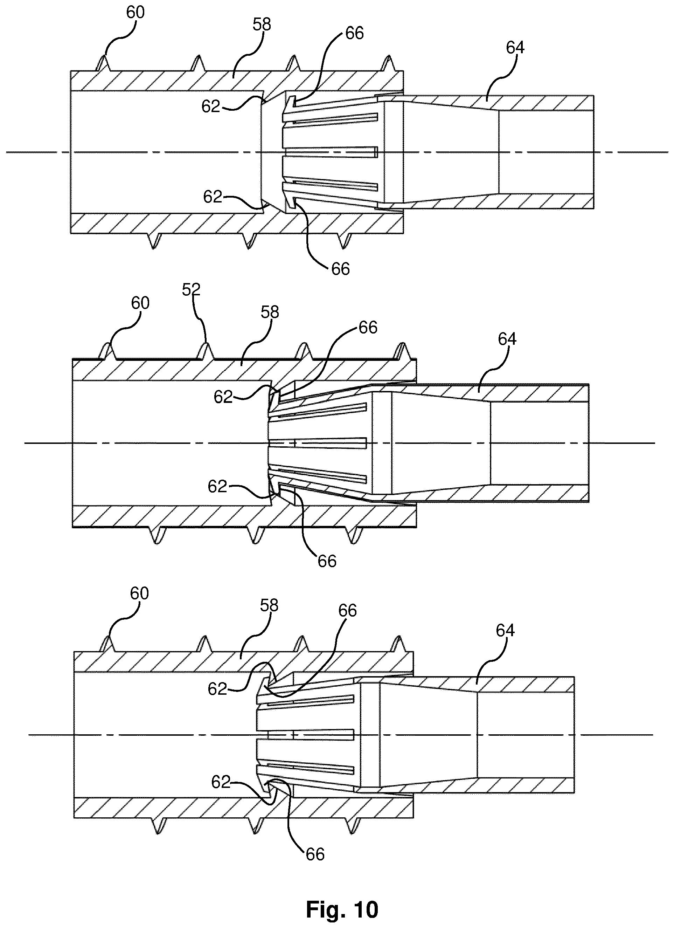

Fig. 8 zeigt eine Seitenansicht und eine Schnittansicht einer monolithischen Gewindehülse 58, an der ein Außengewinde 60 ausgebildet ist. Eine derartige Gewindehülse bildet ebenfalls einen "Anker" im Sinne der vorliegenden Offenbarung, bei dem der "Gewindeabschnitt" durch das Außengewinde 60 gebildet wird, das wie in Fig. 8 gezeigt einen Außendurchmesser $d_G$ hat. Der Bereich zwischen zwei benachbarten Windungen des Gewindes 60 bildet einen "Kernabschnitt" im Sinne der vorliegenden Offenbarung mit einem Durchmesser $d_K$ (siehe Fig. 8). Wie in der Schnittansicht zu sehen ist, ist im Inneren der Gewindehülse 58 ein ringförmiges Rastelement 62 zum Ausbilden einer Rastverbindung mit einem Anschlussstück 64 vorgesehen, welches in Fig. 10 gezeigt ist. Fig. 9 zeigt eine ähnliche Ausführungsform einer Gewindehülse 58, die jedoch nicht monolithisch ausgebildet ist, sondern aus einem Profilband gewickelt ist. Eine derartige gewickelte Hülse lässt sich kostengünstiger herstellen als eine monolithische. Da im Rahmen bevorzugter Ausführungsformen der Erfindung die Gewindehülse in ein vorgefurchtes Innengewinde im Bohrloch eingeschraubt wird, selbst also nicht zum Furchen des Gewindes verwendet wird, sind die erforderlichen Einschraubmomente zum Einschrauben der Gewindehülse 58 begrenzt. Insofern ist die verminderte Verwindungsteifigkeit einer gewickelten Gewindehülse 58 gegenüber einer monolithischen Hülse 58 in vielen Anwendungen unproblematisch. Anstelle des ringförmigen Rastelements 62 kann im Inneren der Gewindehülse 58 auch ein Innengewinde vorgesehen sein, in welches beispielsweise eine Schraube mit metrischem Gewinde eindrehbar ist.

Fig. 10 zeigt eine Abfolge von Schnittansichten der Gewindehülse 58 von Fig. 8, in die ein Anschlussstück 64 eingerastet wird. Zu diesem Zweck umfasst das Anschlussstück 64 Rasthaken 66, die federnd gelagert sind und geeignet sind, an dem ringförmigen Rastelement 62 einzurasten. Das ringförmige Rastelement 62 und die Rasthaken 64 bilden eine Art Schnappverbindung, über die das Anschlussstück 64 einfach in der Gewindehülse 58 befestigt werden kann. Das Anschlussstück 64 kann beispielsweise aus Kunststoff gebildet sein, und kann beispielsweise dazu dienen, Dämmmaterialien an einer Wand oder Decke zu befestigen. Für derartige Anwendungen könnte auch die Gewindehülse 58 aus Kunststoff gefertigt sein. Aus Brandschutzgründen können aber sowohl die Gewindehülse 58 als auch das Anschlussstück 64 aus Metall bestehen.

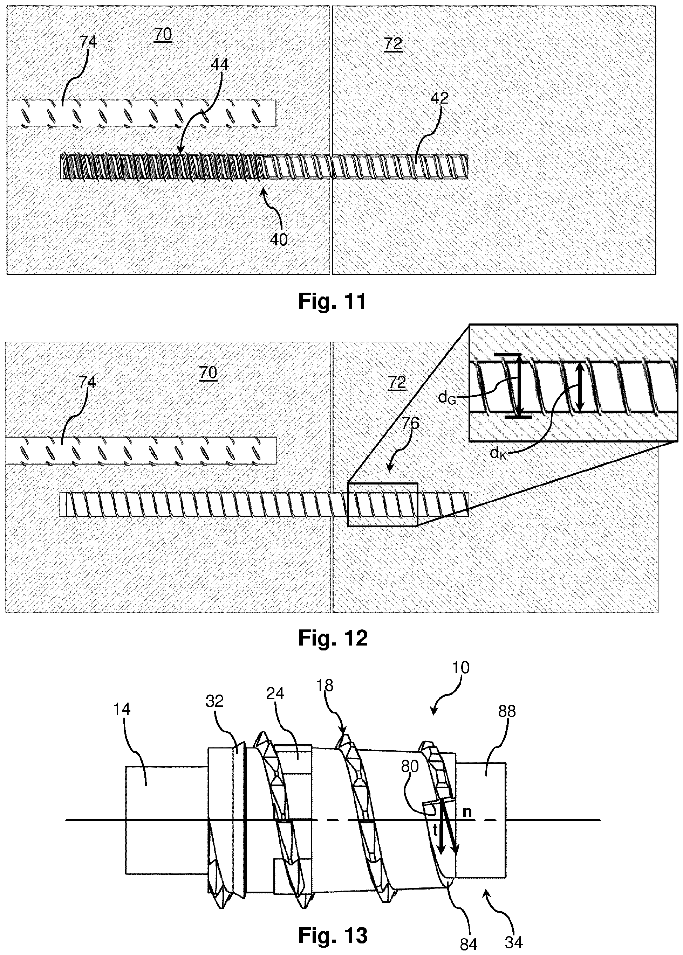

Fig. 11 zeigt eine Schnittansicht einer sogenannten Anschlussbewehrung. Als Anschlussbewehrung bezeichnet man im Betonbau eine übergreifende Bewehrung im Bereich von Arbeitsfugen, bei Betonierabschnitten oder bei Betonfertigteilen zum späteren kraftschlüssigen Verbinden mit sogenanntem Ortbeton, d. h. Frischbeton, der auf der Baustelle in Bauteile in ihrer endgültigen Lage eingebracht wird und dort erhärtet. Mit Bezugszeichen 70 wird ein bereits bestehendes Betonteil bezeichnet, welches mit einem herkömmlichen Armierungsstab 74 aus Stahl armiert ist. Man beachte, dass in der vorliegenden Offenbarung, wie im Fachgebiet üblich, die Begriffe "Armierung" und "Bewehrung" synonym verwendet werden. Mit Bezugszeichen 72 wird ein Anbauteil bezeichnet, welches nachträglich an das bestehende Betonteil 70 durch Ortbeton anbetoniert wurde.

Wie oben erläutert werden die Armierungsstäbe für eine Anschlussbewehrung im Stand der Technik in einem aufwändigen Klebe- oder Verbundverfahren eingebracht, welches ein aufwändiges Reinigen des Bohrlochs mit mehrmaligem Spülen und Ausblasen, ein dosiertes Verfüllen mit Mörtel oder Verbundmasse, Einbringen des Armierungsstabes und Aushärten der Verbundmasse über mehrere Stunden beinhaltet. Dabei bildet der nachträglich eingebrachte Armierungsstab mit dem bestehenden Armierungsstab 74 einen Übergreifungsstoß, für den bestimmte Übergreifungslängen gemäß DIN EN 1992-1-1 eingehalten werden müssen. Bei der in Fig. 11 gezeigten Anschlussbewehrung wird anstelle eines weiteren herkömmlichen Armierungsstabes ein zweiteiliger Anker 40 verwendet, wie er in Zusammenhang mit Figuren 3 bis 5 beschrieben wurde, und der durch einen Gewindestab 42 und eine Wendel 44 gebildet wird. Dieser zweiteilige Anker lässt sich wesentlich leichter und schneller setzen als ein herkömmlicher Armierungsstab nach dem herkömmlichen Klebe- oder Verbundverfahren. Nachdem der zweiteilige Anker 40 im Übergreifungsstoß gesetzt ist, kann das Anbauteil 72 mit Ortbeton hergestellt werden.

Fig. 12 zeigt eine ähnliche Anschlussbewehrung wie Fig. 11, mit dem einzigen Unterschied, dass anstelle des zweiteiligen Ankers 40 eine Gewindestange 76 mit einem Betonschraubengewinde verwendet wird. Unter einem "Betonschraubengewinde" wird in der vorliegenden Offenbarung ein Gewinde verstanden, welches dazu ausgelegt ist direkt, d. h. ohne Verwendung von Dübeln oder dergleichen, in einen Betonuntergrund geschraubt zu werden. Der Fachmann kann ein Betonschraubengewinde ohne weiteres von einem Gewinde für andere Zwecke, insbesondere von einem Holzschraubengewinde oder einem Gewinde zum Zusammenwirken mit einer Mutter (beispielsweise einem metrischen Gewinde) und dergleichen unterscheiden. Als "Betonschraubengewinde" wird in der vorliegenden Offenbarung insbesondere ein Gewinde verstanden, welches - abgesehen von seiner Länge - in seiner Geometrie einem Gewinde gleicht, das in einer Betonschraube mit einer technischen Zulassung in Europa oder den USA am Prioritätstag der vorliegenden Anmeldung Anwendung findet. Als "Betonschraubengewinde" wird in der vorliegenden Offenbarung ferner ein Gewinde mit einer Geometrie verstanden, welches bei Verwendung in einer Schraube mit zulässiger Länge eine europäische technische Bewertung/Zulassung (ETA) gemäß dem Prioritätstag der vorliegenden Anmeldung geltenden Vorschriften erhalten würde. In Fig. 12 ist eine vergrößerte Ansicht eines Teils der Gewindestange 76 gezeigt, in dem der Außendurchmesser des Gewindeabschnitts $d_G$ und der Kerndurchmesser $d_K$ des Kernabschnitts eingezeichnet sind.

Anstelle der Gewindestange 76 könnte auch eine Betonschraube verwendet werden, die an ihrem nachlaufenden, d. h. in der Abbildung von Fig. 12 rechten Ende einen Kopf aufweist. Man beachte, dass ausreichend lange Schrauben oder Gewindestangen mit Betonschraubengewinde, mit denen eine Anschlussbewehrung, wie sie in Fig. 12 schematisch gezeigt ist, hergestellt werden könnte, nach Kenntnis der Erfinder im Stand der Technik nicht bekannt sind, weil sie für die hierin beschriebenen Zwecke bisher nicht in Erwägung gezogen wurden, und derartige Längen für herkömmliche Anwendungen in Beton nicht in Betracht kommen. Im Gegenteil darf gemäß EAD 330232-00-0601 bei Schraubankern im Beton die effektive Verankerungstiefe das Achtfache des Nenndurchmessers $d_b$ des Bohrlochs nicht überschreiten, sodass bekannte Schraubanker zur Verwendung in Beton üblicherweise Gewinde mit einer Länge aufweisen, die das Achtfache des Nenndurchmessers $d_b$ des Bohrlochs nicht oder allenfalls nur geringfügig übersteigt. Die Länge der in Fig. 12 schematisch gezeigte Gewindestange 76 hingegen kann in hier vorgesehenen Anwendungen den Nenndurchmesser $d_b$ um mehr als das Zehnfache, vorzugsweise mehr als das Zwölffache, besonders vorzugsweise mehr als das Fünfzehnfache und insbesondere mehr als das Dreißigfache übersteigen. Da bei der Gewindestange 76 das Betonschraubengewinde über die gesamte Länge ausgebildet ist, ist hier die eingangs genannte "Länge des Gewindeabschnitts" identisch mit der Länge der Gewindestange 76. Trotz der verhältnismäßig großen Verankerungstiefe in dem Betonteil 70 lässt sich die Gewindestange 76 mit Betonschraubengewinde mit vergleichsweise geringen Eindrehmomenten eindrehen, weil das Innengewinde im Bohrloch mit einem Furchwerkzeug 10 nach einer der hier beschriebenen Ausführungsformen zuvor gefurcht werden kann.

In bevorzugten Ausführungsformen ist die Gewindestange 76 in Bezug auf den Kerndurchmesser $d_K$ mit einer Fertigungstoleranz von weniger als $0{,}2 \cdot (d_b)^{0,3}$ mm hergestellt, ist das Furchwerkzeug 10 in Bezug auf den Durchmesser $d_o$ des gedachten Zylinders, auf dem die Schneidkanten 26 liegen, mit einer Fertigungstoleranz von weniger als $0{,}1 \cdot (d_b)^{0,3}$ mm hergestellt, und gilt: $0{,}0$ mm $\leq d_o - d_K \leq 0{,}7$ mm, vorzugsweise $0{,}1$ mm $\leq d_o - d_K \leq 0{,}5$ mm. Dabei entspricht der Nenndurchmesser $d_b$ des Bohrlochs wie eingangs erläutert der Größenangabe eines Bohrers, auf den der Anker abgestimmt ist, in Millimeter, ist aber selbst dimensionslos. Die Fertigungstoleranzen skalieren hierbei mit der 0,3-ten Potenz des Nenndurchmessers $d_b$. Mit dieser Bemessung ergibt sich ein sehr geringes Volumen zwischen dem Kern der Gewindestange 76 und der Bohrlochwand. Trotzdem können übermäßige Einschraubdrehmomente vermieden werden, wenn die Bohrlochwand mit dem oben beschriebenen Furchwerkzeug 10 bearbeitet wird, sodass die Reibung zwischen dem Kernabschnitt und der Bohrlochwand vergleichsweise gering gehalten werden kann. Im Ergebnis ergeben sich aus den oben erläuterten Gründen in der Praxis hohe Tragfähigkeiten unter Last.

In bevorzugten Ausführungsformen ist die Gewindestange 76 in Bezug auf den Außendurchmesser $d_G$ ihres Gewindes mit einer Fertigungstoleranz von weniger als $0{,}2 \cdot (d_b)^{0,3}$ mm hergestellt, ist das Furchwerkzeug (10) in Bezug auf den maximalen Außendurchmesser $d_F$ seines Furchgewindes 18 ebenfalls mit einer Fertigungstoleranz von weniger als $0{,}2 \cdot (d_b)^{0,3}$ mm hergestellt, und es gilt:

$$0{,}0 \leq (d_F - d_G)/\, d_K \leq 0{,}15, \;\; \text{vorzugsweise } 0{,}025 \leq (d_F - d_G)/\, d_K \leq 0{,}10$$

Hierbei berücksichtigt die Bezugnahme auf den "maximalen Außendurchmesser $d_F$ des Furchgewindes 18" wie eingangs erwähnt den Umstand, dass das Furchgewinde 18 der in Fig. 1 und Fig. 2 gezeigten Furchwerkzeuge 10 einen variablen Außendurchmesser hat, um einen Anschnitt zu bilden. Für die Tiefe des letztendlich gefurchten Innengewindes ist aber nur der maximale Außendurchmesser $d_F$ (siehe Figur 2a) maßgeblich. Ähnliches gilt auch für das Betonschraubengewinde der Gewindestange 76, welches ebenfalls an seinem vorlaufenden Ende einen ansteigenden Gewindedurchmesser haben kann (in Fig. 12 nicht gezeigt), allerdings ist der Außendurchmesser des Gewindes über den überwiegenden Teil der Länge der Gewindestange 76 konstant, und dieser konstante Durchmesser wird mit $d_G$ bezeichnet. Mit anderen Worten entspricht der Außendurchmesser $d_G$ dem Durchmesser des kleinsten gedachten Zylinders, in den das Gewinde der Gewindestange 76 als Ganzes einbeschrieben werden kann.

Abweichend vom eingangs zitierten Stand der Technik sieht diese Ausführungsform ausdrücklich nicht vor, den Außendurchmesser $d_G$ des Gewindes des Ankers größer zu wählen, als den maximalen Außendurchmesser $d_F$ des Furchgewindes. Während im Stand der Technik ein Mindermaß des vorgeschnittenen Innengewindes gegenüber dem Außengewinde des Ankers als vorteilhaft dargestellt wird, um künstlich Substratpartikel abzutragen und das Eindrehmoment zum Zwecke eines "soliden Setzgefühls" zu erhöhen, wird das Bohrloch in bevorzugten Ausführungsformen mithilfe des Furchwerkzeugs 10 so bearbeitet, dass es möglichst überall eng am Kernabschnitt des jeweiligen Ankers anliegt. Ein limitierender Faktor für den Ankerdurchmesser bleibt trotz der Bearbeitung des Bohrlochs zur Annäherung an eine ideale Zylinderform die Reibung des Kerns bzw. Kernabschnitts an der Bohrlochwand und eine damit einhergehende Erhöhung des Eindrehmoments. Bevorzugte Ausführungsformen der Erfindung vermeiden daher den zusätzlichen Eindrehwiderstand, wie er im eingangs diskutierten Stand der Technik durch Verformungsarbeit an der Spitze des Ankergewindes bewusst erzeugt wird, zugunsten der Möglichkeit, den Kerndurchmesser des Ankers größer zu wählen, um dadurch die Tragfähigkeit aus den eingangs erläuterten Gründen zu erhöhen.

Um die Gewindestange 76 mit Betonschraubengewinde bzw. eine entsprechend lange Betonschraube noch einfacher setzen zu können, wurde im Zusammenhang mit dem Furchwerkzeug 10 von Fig. 1 bis Fig. 2d vorgeschlagen, am vorlaufenden Ende 12a des Grundkörpers 12 ein Antriebselement 34 vorzusehen, das dazu bestimmt ist, mit einem Kraftangriff eines zugehörigen Ankers zusammenzuwirken. Bei der Gewindestange 76 könnte es sich bei dem Kraftangriff beispielsweise um eine sechseckige Vertiefung handeln, während das Antriebselement 34 durch einen Sechskantantrieb gebildet sein könnte. In diesem Fall kann die Gewindestange 76 unmittelbar nach dem Furchen des Gewinde in dem Bohrloch in dem bestehenden Bauteil 70 unter Verwendung derselben Maschine eingeschraubt werden, die auch zum Furchen verwendet wurde, ohne das Werkzeug wechseln zu müssen. Man beachte, dass zu dem Zeitpunkt, an dem die Gewindestange 76 in den Befestigungsgrund 70 eingedreht wird, das Anbauteil 72 noch nicht vorhanden ist, und sowohl das nachlaufende Ende der Gewindestange 76 mit Kraftantrieb (d. h. das rechte Ende in Fig. 12) als auch das zum Eindrehen verwendete Furchwerkzeug 10 (in Fig. 12 nicht gezeigt) stets außerhalb des Befestigungsgrundes 70 bleibt.

In manchen Anwendungen kann es jedoch erforderlich oder wünschenswert sein, den Anker, oder im Falle eines zwei- oder mehrteiligen Ankers, einen Teil desselben vollständig in dem bestehenden Bauteil 70 zu versenken. Dies gilt beispielsweise für die in Figur 11 gezeigte Wendel 44 des zweiteiligen Ankers 40, die vollständig in das bestehende Bauteil 70 eingeschraubt ist. Für diese Zwecke ist ein einfaches Sechskant-Antriebselement am führenden Ende des Furchwerkzeugs 10 nicht geeignet. Um den Anker oder Ankerteil vollständig im Befestigungsgrund 70 zu versenken, muss das Furchwerkzeug 10 erneut zumindest teilweise in das Bohrloch eingedreht werden, sodass es typischerweise ein weiteres Gewinde furchen müsste. Ferner lässt sich das Sechskant-Antriebselement des Furchwerkzeugs nach Erreichen der gewünschten Einsetztiefe im Befestigungsgrund nicht ohne weiteres von dem Kraftangriff trennen, wenn das Furchwerkzeug sich selbst im Bohrloch befindet. Um ein versenkendes Einschrauben ohne einen Werkzeugwechsel durchführen zu können, wird im Zusammenhang mit Figuren 13 bis 16 ein weiteres Furchwerkzeug 10 mit einem für diese Zwecke geeigneten Antriebselement 34 beschrieben.

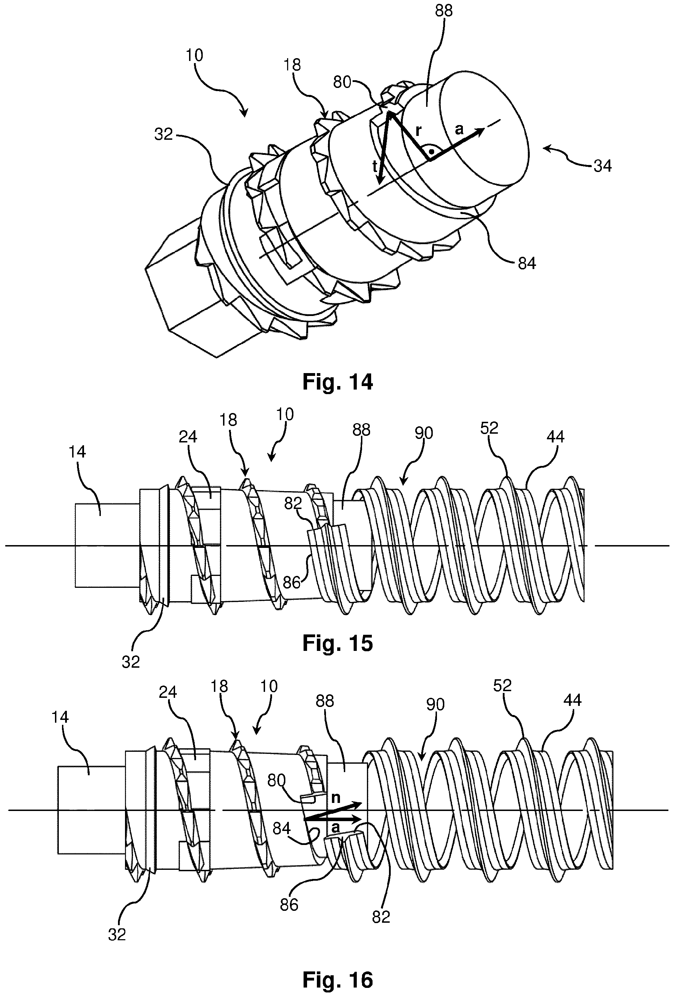

Fig. 13 und 14 zeigen eine Seitenansicht bzw. eine perspektivische Ansicht eines Furchwerkzeugs 10, an dessen vorlaufenden Ende ein Antriebselement 34 ausgebildet ist, das eine erste Anschlagfläche 80, eine zweite Anschlagsfläche 84 und einen axialen Vorsprung 88 umfasst. Dieses Antriebselement 34 ist zum Zusammenwirken mit einem "Kraftangriff" einer Wendel 44 bestimmt, der ebenfalls eine erste Anschlagfläche 82, eine zweite Anschlagsfläche 86 (die im in Fig. 15 und 16 gezeigten Ausführungsbeispiel einfach durch die Kanten am nachlaufenden Ende der Wendel 44 gebildet sind) und eine Aufnahme zum Aufnehmen des axialen Vorsprung 88 umfasst, welche im vorliegenden Fall durch den zylindrischen Innenraum 90 der Wendel 44 gebildet ist.

Das Antriebselement 34 des Furchwerkzeugs 10 und der Kraftangriff der Wendel 44 können eine Eingriffsstellung einnehmen, die in Fig. 15 gezeigt ist, und in der die ersten Flächen 80, 82 und die zweiten Flächen 84, 86 des Antriebselements 34 und des Kraftangriffs jeweils aneinander anstoßen, und in der der axiale Vorsprung 88 des Antriebselements 34 in der Aufnahme, d. h. im axialen Innenraum 90 der Wendel 44, aufgenommen ist. Man erkennt, dass das Antriebselement 34 des Furchwerkzeugs 10 und der Kraftangriff der Wendel 44, so aufeinander abgestimmt sind, dass in dieser Eingriffsstellung

- die relative Ausrichtung des Furchwerkzeugs 10 und der Wendel 44 derart festgelegt ist, dass das Furchgewinde 18 auf einer gedachten Fortsetzung des Gewindes 52 der Wendel 44 liegt,
- bei einer Drehung des Furchwerkzeugs 10 in Einschraubrichtung ein Drehmoment von dessen Antriebselement 34 auf den "Kraftangriff" der Wendel 44 übertragbar ist, der im vorliegenden Beispiel einfach durch das nachlaufende Ende derselben gebildet ist, und
- bei einer Drehung des Furchwerkzeugs 10 entgegen der Einschraubrichtung kein Drehmoment von dessen Antriebselement 34 auf den Kraftangriff der Wendel 44 übertragbar ist.

Da das Furchwerkzeug 10 und die Wendel 44 in der in Fig. 15 gezeigten Eingriffsstellung so in Bezug aufeinander ausgerichtet sind, dass das Furchgewinde 18 auf der gedachten Fortsetzung des Gewindes 52 der Wendel 44 liegt, kann das Furchwerkzeug 10 beim versenkenden Einschrauben der Wendel 44 erneut in das Bohrloch (in Fig. 15 und 16 nicht gezeigt) eingeschraubt werden, ohne ein weiteres Gewinde zu furchen, weil das Furchgewinde 18 durch die oben beschriebene Synchronisierung mit dem Gewinde 52 der Wendel 44 automatisch in das bereits bestehende gefurchte Gewinde im Bohrloch geführt wird. Solange das Furchwerkzeug 10 in Einschraubrichtung gedreht wird, überträgt es ferner ein Drehmoment von seinem Antriebselement 34 auf den Kraftangriff der Wendel 44, sodass diese in das im Bohrloch gefurchte Gewinde geschraubt wird. Wenn die Wendel 44 die erwünschte Einsetztiefe erreicht hat, wie sie beispielsweise in Fig. 11 gezeigt ist, wird die Drehrichtung des Furchwerkzeugs 10 umgekehrt, sodass es aus dem Bohrloch herausgeschraubt wird. Bei dieser umgekehrten Drehrichtung wird kein Drehmoment auf den Kraftangriff der Wendel 44 ausgeübt, sodass die Wendel 44 in der versenkten Position in den Befestigungsgrund 70 verbleibt.

Je nach Art des einzuschraubenden Ankers/Ankerteils können verschiedene Antriebselemente und zugehörige Kraftangriffe vorgesehen sein, die die hier beschriebene Funktionalität, also die Synchronisierung von Furchgewinde 18 und Ankergewinde 52, eine Drehmomentübertragung in Einschraubrichtung und keine Drehmomentübertragung entgegen der Einschraubrichtung, bieten. Es wird betont, dass dieser Aspekt der Erfindung nicht auf eine spezielle Ausgestaltung von Antriebselement 34 und Kraftangriff beschränkt ist. Als besonders geeignet haben sich aber Antriebselemente 34 erwiesen, die eine erste Anschlagsfläche haben, deren Flächennormale $n$ zumindest ungefähr mit einem Tangentialvektor $t$ übereinstimmt, der zu jeder Zeit angibt, in welche Richtung sich die erste Anschlagsfläche 80 aufgrund der Drehung (nicht jedoch des axialen Vortriebs) des Furchwerkzeugs 10 in Einschraubrichtung bewegt, um wirksam ein Drehmoment auf eine zugehörige erste Anschlagsfläche 82 des Kraftangriffs übertragen zu können. Die Vektoren $n$ und $t$ sind in Fig. 13 eingezeichnet. Konkret sollte die Flächennormale der ersten Anschlagsfläche 80 mit dem Tangentialvektor $t$ einen Winkel von maximal 45°, vorzugweise maximal 30° und besonders vorzugsweise maximal 15° bilden. Dies ist beispielsweise in Fig. 13 zu sehen, in der zu erkennen ist, dass der Winkel zwischen den Vektoren $n$ und $t$ vergleichweise gering ist, und im vorliegenden Fall dem Steigungswinkel der Gewinde 18, 52 entspricht. Für die reine Drehmomentübertragung wäre es zu bevorzugen, wenn die Flächennormale $n$ exakt mit dem Tangentialvektor $t$ übereinstimmt, allerdings hat die gezeigte Geometrie den Vorteil, dass die Fertigung des "Kraftantriebs" bei der Wendel 44 vereinfacht ist, der hier einfach durch die Kanten 82 , 86 am nachlaufenden Ende des gewickelten Profilbandes gebildet ist, aus dem die Wendel 44 besteht.

Der Tangentialvektor $t$ lässt sich mathematisch als Vektorprodukt aus einem Axialvektor $a$, der in Richtung auf das vorlaufende Ende des Furchwerkzeugs gerichtet ist, und einem Radialvektor $r$ definieren, dessen Spitze auf der ersten Anschlagsfläche liegt, sodass gilt: $t = a \times r$, siehe insbesondere Fig. 14.

Die wie beschrieben ausgerichteten ersten Anschlagsflächen 80 und 82 gestatten es allgemein, beim Eindrehen des Furchwerkzeugs 10 wirksam ein Drehmoment auf den Kraftangriff des Ankers/Ankerteils zu übertragen. Ferner helfen die ersten Anschlagsflächen 80, 82 dabei, die relative Ausrichtung des Furchwerkzeugs 10 und des Ankers/Ankerteils in Bezug auf ihre Drehstellung zu definieren, wenn die ersten Anschlagsflächen 80, 82 in der genannten Eingriffsstellung aneinander anliegen, um dadurch die Synchronisierung des Ankergewindes 52 und des Furchgewindes 18 in Bezug auf ihre Drehstellung sicherzustellen. Beim Herausdrehen des Furchwerkzeugs 10 hingegen heben sich die ersten Anschlagsflächen 80, 82 einfach voneinander ab, sodass kein Drehmoment vom Furchwerkzeug 10 auf den Kraftangriff des Ankers/Ankerteils übertragen wird, und der Anker/der Ankerteil im Untergrund verbleiben kann, während das Furchwerkzeug 10 herausgedreht wird.

Ferner hat es sich allgemein als vorteilhaft erwiesen, wenn das Antriebselement 34 des Furchwerkzeugs 10, unabhängig von dessen konkreter Ausgestaltung, eine zweite Anschlagsfläche 84 aufweist, deren Flächennormale **n** eine Komponente in Richtung des Axialvektors **a** hat, und der Kraftantrieb des Ankers/Ankerteils eine zweite Anschlagsfläche 86 aufweist, die an der zweiten Anschlagsfläche 84 des Antriebselements 34 anliegt, wenn das Antriebselement 34 und der Kraftantrieb die Eingriffsstellung einnehmen. Dieses Kriterium ist im Hinblick auf die zweiten Anschlagsflächen 84, 86 im gezeigten Ausführungsbeispiel von Fig. 13 bis 16 offensichtlich erfüllt. Die Flächennormale n der zweiten Anschlagsfläche 84 des Antriebselements 34 ist in Fig. 16 gezeigt, und es ist wiederum zu erkennen, dass die Flächennormale n mit dem Axialvektor a lediglich einen geringen Winkel bildet, der wiederum dem Steigungswinkel der Gewinde 18, 52 entspricht. In jedem Fall hat aber die Flächennormale n eine (positive) Komponente in Richtung dieses axialen Vektors a. In bevorzugten Ausführungsformen ist der Winkel zwischen der Flächennormalen n der zweiten Anschlagsfläche 84 und dem Axialvektor a geringer als 45°, vorzugsweise geringer als 30°. Die zweiten Anschlagsflächen 84, 86 helfen dabei, die relative Ausrichtung des Furchwerkzeugs 10 und des Ankers/Ankerteils in Bezug auf ihre axiale Position zu definieren, wenn die zweiten Anschlagsflächen 84, 86 in der genannten Eingriffstellung aneinander anliegen, um dadurch die Synchronisierung des Ankergewindes 52 und des Furchgewindes 18 bezüglich ihrer axialen Position sicherzustellen.

Schließlich hat es sich allgemein als vorteilhaft erwiesen, wenn das Antriebselement 34 einen axialen Vorsprung und der Kraftangriff des Ankers eine Aufnahme zum Aufnehmen des axialen Vorsprungs hat, wenn das Antriebselement und der Kraftantrieb die Eingriffsstellung einnehmen, wie dies im konkreten Ausführungsbeispiel durch den axialen Vorsprung 88 und den als "Aufnahme" dienenden Innenraum 90 der Wendel 44 gezeigt ist. Durch die Kombination von einem axialen Vorsprung mit einer Aufnahme kann im allgemeinen ein sicherer Eingriff zwischen dem Antriebselement 34 des Furchwerkzeugs 10 und dem Kraftangriff des Ankers/Ankerteils hergestellt werden.

Obwohl Erfindung anhand von konkreten Ausführungsformen beschrieben wurde, versteht es sich, dass die gezeigten Ausführungsbeispiele lediglich zur Illustration der Erfindung dienen, diese aber nicht beschränken. Stattdessen ist die Erfindung nur durch die Merkmale beschränkt, die in den anhängenden Ansprüchen angegeben sind.

**Patentansprüche**

1. System zum Befestigen eines Ankers (40) in einem Bohrloch in einem mineralischen Untergrund, insbesondere Beton, Mörtel oder Mauerwerk, umfassend einen Anker (40) mit einem Kernabschnitt und einem Gewindeabschnitt, wobei der Kernabschnitt einen Kerndurchmesser $d_K$ und der Gewindeabschnitt einen Außendurchmesser $d_G$ hat, und
   ein Furchwerkzeug (10) zum Furchen eines Innengewindes in dem Bohrloch, wobei das Furchwerkzeug (10) folgendes umfasst:

   einen zumindest näherungsweise zylindrischen oder konischen Grundkörper (12) mit einem führenden und einem nachlaufenden Ende (12a, 12b), wobei ein Kraftangriff vorgesehen ist, über den ein Drehmoment zum Eindrehen des Furchwerkzeugs (10) in das Bohrloch und zum Furchen des Gewindes auf den Grundkörper (12) übertragbar ist, wobei der Grundkörper (12) eine Außenfläche hat, auf der ein Furchgewinde (18) ausgebildet ist, welches geeignet ist, das Innengewinde in die Wand des Bohrlochs zu furchen,
   **dadurch gekennzeichnet, dass** das Furchwerkzeug (10) an seinem führenden Ende (12a) ein Antriebselement (34) aufweist, welches geeignet ist, mit einem Kraftangriff des Ankers (40) oder eines Teils desselben zusammenzuwirken, der in das mit dem Furchwerkzeug behandelte Bohrloch einzuschrauben ist, wobei das Antriebselement (34) ein Mehrkant- oder ein Sechsrundantrieb ist, oder wobei das Antriebselement durch ein Element gebildet ist, dass geeignet ist, in einen als Nut ausgebildeten Kraftangriff des Ankers (40) einzugreifen.

2. System zum Befestigen eines Ankers (40) in einem Bohrloch in einem mineralischen Untergrund, insbesondere Beton, Mörtel oder Mauerwerk, umfassend einen Anker (40) mit einem Kernabschnitt und einem Gewindeabschnitt, wobei der Kernabschnitt einen Kerndurchmesser $d_K$ und der Gewindeabschnitt einen Außendurchmesser $d_G$ hat, und
   ein Furchwerkzeug (10) zum Furchen eines Innengewindes in dem Bohrloch, wobei das Furchwerkzeug (10) folgendes umfasst:

   einen zumindest näherungsweise zylindrischen oder konischen Grundkörper (12) mit einem führenden und einem nachlaufenden Ende (12a, 12b), wobei ein Kraftangriff vorgesehen ist, über den ein Drehmoment zum Eindrehen des Furchwerkzeugs (10) in das Bohrloch und zum Furchen des Gewindes auf den Grundkörper (12) übertragbar ist, wobei der Grundkörper (12) eine Außenfläche hat, auf der ein Furchgewinde (18) ausgebildet ist, welches geeignet ist, das Innengewinde in die Wand des Bohrlochs zu furchen,

**dadurch gekennzeichnet, dass** das Furchwerkzeug (10) an seinem führenden Ende (12a) ein Antriebselement (34) aufweist, welches geeignet ist, mit einem Kraftangriff des Ankers (40) oder eines Teils desselben zusammenzuwirken, der in das mit dem Furchwerkzeug behandelte Bohrloch einzuschrauben ist,
wobei das Antriebselement (34) des Furchwerkzeugs (10) und der Kraftangriff des Ankers (40) so aufeinander abgestimmt sind, dass sie eine Eingriffsstellung einnehmen können, und in dieser Eingriffsstellung

- die relative Ausrichtung des Furchwerkzeugs (10) und des Ankers (40) oder des genannten Teils desselben derart festgelegt ist, dass das Furchgewinde (18) auf einer gedachten Fortsetzung des Gewindes des Ankers (40) liegt,
- bei einer Drehung des Furchwerkzeugs (10) in Einschraubrichtung ein Drehmoment von dessen Antriebselement (34) auf den Kraftangriff des Ankers (40) oder des Teils desselben übertragbar ist, und
- bei einer Drehung des Furchwerkzeugs (10) entgegen der Einschraubrichtung kein Drehmoment von dessen Antriebselement (34) auf den Kraftangriff des Ankers (40) oder des Teils desselben übertragbar ist.

3. System nach Anspruch 2, bei dem das Antriebselement (34) des Furchwerkzeugs eine erste Anschlagsfläche (80) aufweist, deren Flächennormale $n$ mit einem Tangentialvektor $t$ einen Winkel von maximal 45°, vorzugweise maximal 30° und besonders vorzugsweise maximal 15° bildet,

wobei der Tangentialvektor $t$ definiert ist als Vektorprodukt aus einem Axialvektor $a,$ der in Richtung auf das vorlaufende Ende (12a) des Furchwerkzeugs (10) gerichtet ist, und einem Radialvektor $r,$ dessen Spitze auf der ersten Anschlagsfläche (80) liegt, sodass gilt: $t = a \times r,$
und wobei der Kraftangriff des Ankers (40) oder des genannten Teils desselben eine erste Anschlagsfläche (82) aufweist, die an der ersten Anschlagsfläche des Antriebselements (34) anliegt, wenn das Antriebselement (34) und der Kraftangriff die Eingriffsstellung einnehmen,
wobei das Antriebselement (34) des Furchwerkzeugs (10) vorzugsweise eine zweite Anschlagsfläche (84) aufweist, deren Flächennormale eine Komponente in Richtung des Axialvektors $a$ hat, und der Kraftangriff des Ankers (40) oder des genannten Teils desselben eine zweite Anschlagsfläche (86) hat, die an der zweiten Anschlagsfläche (84) des Antriebselements (34) anliegt, wenn das Antriebselement (34) und der Kraftangriff die Eingriffsstellung einnehmen.

4. System nach einem der Ansprüche 2 oder 3, bei dem das Antriebselement (34) einen axialen Vorsprung (88) und der Kraftangriff des Ankers (40) oder des genannten Teils desselben eine Aufnahme zum Aufnehmen des axialen Vorsprungs (88) hat, wenn das Antriebselement (34) und der Kraftangriff die Eingriffsstellung einnehmen,
wobei der Anker vorzugsweise durch eine Gewindehülse oder der Teil des Ankers (40) durch eine Wendel (44) gebildet wird, und die Aufnahme zum Aufnehmen des axialen Vorsprung (88) durch den Innenraum der Gewindehülse bzw. der Wendel gebildet wird.

5. System nach einem der vorhergehenden Ansprüche, bei dem auf der Außenfläche des Grundkörpers (12) des Furchwerkzeugs (10) eine Mehrzahl von Erhebungen (24) ausgebildet sind, die jeweils eine Schneidkante (26) aufweisen, wobei sämtliche Schneidkanten (26) zumindest abschnittsweise auf einem gedachten Zylinder mit einem Durchmesser ($d_o$) liegen, und wobei die Schneidkanten (26) geeignet sind, beim Eindrehen des Furchwerkzeugs (10) in das Bohrloch die Innenwand des Bohrlochs zumindest teilweise abzutragen, um die Innenwand des Bohrlochs dem gedachten Zylinder anzupassen,

wobei die Schneidkante (26) vorzugsweise durch eine Kante gebildet wird, an der eine im wesentlichen radiale Fläche (28), die gegenüber der Radialrichtung um weniger als 30°, vorzugsweise weniger als 15° geneigt ist, und eine im wesentlichen tangentiale Fläche (30), die gegenüber der Radialrichtung um mindestens 45° geneigt ist, aneinander stoßen, wobei die Flächennormale (32) der im wesentlichen radialen (28) Fläche in Einschraubrichtung zeigt, und/oder
wobei das Furchwerkzeug (10) vorzugsweise mindestens vier, vorzugsweise mindestens sechs der genannten Erhebungen (24) mit zugehöriger Schneidkante (26) aufweist.

6. System nach einem der vorhergehenden Ansprüche, wobei das Furchgewinde (18) eine Mehrzahl von Windungen aufweist, und die Mehrzahl von Erhebungen (24) zwischen Windungen des Furchgewindes (18) angeordnet sind, und/oder

wobei das Furchgewinde (18) weniger als vier Windungen, vorzugsweise zwischen 2,8 und 3,8 Windungen aufweist, und/oder

wobei das Furchwerkzeug (10), vorzugsweise auf der dem nachlaufenden Ende (12b) näheren Seite des Furchgewindes (18), ein ringförmiges Abstreifelement (32) hat, dass geeignet ist, Bohrmehl von der Bohrlochwand abzustreifen, und/oder

wobei der Außendurchmesser des Furchgewindes (18) in Richtung auf das führende Ende (12a) abnimmt, und/oder

wobei in dem Furchgewinde (18) Ausnehmungen (20) ausgebildet sind und zwischen benachbarten Ausnehmungen Schneidezähne (22), insbesondere keilförmig Schneidezähne gebildet sind, wobei vorzugsweise zumindest ein Teil der Ausnehmungen (20) der gesamten Höhe des Furchgewindes (18) entsprechen, sodass das Furchgewinde (18) abschnittsweise unterbrochen ist.

7. System nach einem der Ansprüche 1 bis 6, bei dem der Anker durch eine Gewindehülse (58) gebildet ist, die ein Außengewinde (52) aufweist, das den genannten Gewindeabschnitt bildet,

wobei die Gewindehülse (58) vorzugsweise ein Innengewinde, insbesondere ein metrisches Innengewinde aufweist, und/oder

wobei die Gewindehülse (58) vorzugsweise aus einem Profilband gewickelt ist, das eine radial innere und eine radial äußere Seite aufweist, wobei auf der radial äußeren Seite ein Gewindegrat (52) ausgebildet ist, der geeignet ist, in das mithilfe des Furchwerkzeugs (10) gefurchte Innengewinde im Bohrloch eingeschraubt zu werden, und/oder

wobei die Gewindehülse (58) zumindest überwiegend aus korrosionsfestem Stahl, Nichteisenmetall, insbesondere Aluminium oder Kunststoff, insbesondere faserverstärktem Kunststoff besteht, oder

bei dem der Anker (40) mindestens zweiteilig ausgebildet ist, und folgendes umfasst:

eine Wendel (44), die in das mithilfe des Furchwerkzeugs (10) gefurchte Innengewinde im Bohrloch einschraubbar ist, wobei die Wendel (44) vorzugsweise durch ein gewickeltes Profilband gebildet ist, das eine radial innere und eine radial äußere Seite aufweist, wobei auf der radial äußeren Seite ein Gewindegrat (52) ausgebildet ist, der geeignet ist, in das mithilfe des Furchwerkzeugs (10) gefurchte Innengewinde im Bohrloch eingeschraubt zu werden, und

eine Schraube oder Gewindestange (42), mit einem Außengewinde (46), das geeignet ist, in die Wendel (44) eingeschraubt zu werden, wobei die Gewindestange (42) insbesondere durch einen Schalungsankerstab gebildet wird, und/oder wobei die Schraube oder Gewindestange (42) vorzugsweise ein im Querschnitt rechteckiges oder trapezförmiges Gewinde (46) hat, mit einer abgeflachten Gewindespitze (50), die zumindest einen Teil des genannten Kernabschnitts des zweiteiligen Ankers (40) bildet.

8. Verfahren zum Befestigen eines Ankers (40) mit einem Kernabschnitt und einem Gewindeabschnitt in einem Bohrloch in einem mineralischen Untergrund, mit den folgenden Schritten:

Bohren eines Bohrlochs,

Furchen eines Innengewindes in dem Bohrloch, indem ein Furchwerkzeug (10) in das Bohrloch eingedreht wird, und

Einsetzen des Ankers (40) in das Bohrloch,

wobei das Furchwerkzeug (10) folgendes umfasst:

einen zumindest näherungsweise zylindrischen oder konischen Grundkörper mit einem führenden und einem nachlaufenden Ende (12a, 12b), wobei ein Kraftangriff (14) vorgesehen ist, über den ein Drehmoment zum Eindrehen des Furchwerkzeugs (10) in das Bohrloch und zum Furchen des Gewindes auf den Grundkörper (12) übertragen wird, wobei der Grundkörper (12) eine Außenfläche hat, auf der ein Furchgewinde (18) ausgebildet ist, welches geeignet ist, das Innengewinde in die Wand des Bohrlochs zu furchen, **dadurch gekennzeichnet, dass** das Furchwerkzeug (10) an seinem führenden Ende (12a) ein Antriebselement (34) aufweist, welches geeignet, mit einem Kraftangriff des Ankers (40) oder eines Teils desselben zusammenzuwirken, und wobei der Anker (40) bzw. der Teil desselben im genannten Schritt des Einsetzens des Ankers in das Bohrloch mithilfe des Antriebselements (34) in das mit dem Furchwerkzeug (10) behandelte Bohrloch eingeschraubt wird.

9. Verfahren nach Anspruch 8, wobei das Antriebselement (34) ein Mehrkant- oder ein Sechsrundantrieb ist, oder bei dem das Einsetzen des Ankers (40) in das Bohrloch die folgenden Schritte umfasst:

- Bringen des Antriebselements (34) des Furchwerkzeugs (10) und des Kraftangriffs des Ankers (40) oder des Teils desselben in eine Eingriffsstellung, in der die relative Ausrichtung des Furchwerkzeugs (10) und des Ankers (40) oder des genannten Teils desselben derart festgelegt ist, dass das Furchgewinde (18) auf einer gedachten Fortsetzung des Gewindes des Ankers (40) liegt,

- Drehen des Furchwerkzeugs (10) in Einschraubrichtung, wobei ein Drehmoment von dessen Antriebselement (34) auf den Kraftangriff des Ankers (40) oder des Teils desselben übertragen wird, um den Anker (40) oder den Teil desselben in das Bohrloch einzuschrauben, bis der Anker (40) oder Teil des Ankers sich vollständig und das Furchwerkzeug (10) sich zumindest teilweise in dem Bohrloch befindet,

- Drehen des Furchwerkzeugs (10) entgegen der Einschraubrichtung, um es aus dem Bohrloch herauszudrehen, wobei es kein Drehmoment von seinem Antriebselement (34) auf den Kraftangriff des Ankers (40) oder des Teils desselben überträgt.

10. Verfahren nach Anspruch 9, bei dem das Antriebselement (34) des Furchwerkzeugs eine erste Anschlagsfläche (80) aufweist, deren Flächennormale $n$ mit einem Tangentialvektor $t$ einen Winkel von maximal 45°, vorzugweise maximal 30° und besonders vorzugsweise maximal 15° bildet,

wobei der Tangentialvektor $t$ definiert ist als Vektorprodukt aus einem Axialvektor $a$, der in Richtung auf das vorlaufende Ende (12a) des Furchwerkzeugs (10) gerichtet ist, und einem Radialvektor $r$, dessen Spitze auf der ersten Anschlagsfläche (80) liegt, sodass gilt: $t = a \times r$,
und wobei der Kraftangriff des Ankers (40) oder des genannten Teils desselben eine erste Anschlagsfläche (82) aufweist, die an der ersten Anschlagsfläche des Antriebselements (34) anliegt, wenn das Antriebselement (34) und der Kraftangriff die Eingriffsstellung einnehmen, wobei
das Antriebselement (34) des Furchwerkzeugs (10) vorzugsweise eine zweite Anschlagsfläche (84) aufweist, deren Flächennormale eine Komponente in Richtung des Axialvektors $a$ hat, und der Kraftangriff des Ankers (40) oder des genannten Teils desselben eine zweite Anschlagsfläche (86) hat, die an der zweiten Anschlagsfläche (84) des Antriebselements (34) anliegt, wenn das Antriebselement (34) und der Kraftangriff die Eingriffsstellung einnehmen.

11. Verfahren nach einem der Ansprüche 9 oder 10, bei dem das Antriebselement (34) einen axialen Vorsprung (88) und der Kraftangriff des Ankers (40) eine Aufnahme hat, in der der axiale Vorsprung (88) zumindest teilweise aufgenommen wird, wenn das Antriebselement (34) und der Kraftangriff in die Eingriffsstellung gebracht werden, wobei der Anker vorzugsweise durch eine Gewindehülse (58) oder der Teil des Ankers (40) durch eine Wendel (44) gebildet wird, und die Aufnahme zum Aufnehmen des axialen Vorsprung (88) durch den Innenraum der Gewindehülse bzw. der Wendel gebildet wird.

12. Verfahren nach einem der Ansprüche 8 bis 11, bei dem der Anker durch eine Schraube oder Gewindestange (76) gebildet ist, bei der der genannte Gewindeabschnitt kraft-, stoff- oder formschlüssig mit dem genannten Kernabschnitt verbunden ist, wobei die Schraube oder Gewindestange (76) vorzugsweise zumindest überwiegend aus korrosionsfestem Stahl, Nichteisenmetall, insbesondere Aluminium oder Kunststoff, insbesondere faserverstärktem Kunststoff besteht, oder

bei dem der Anker durch eine Gewindehülse (58) gebildet ist, die ein Außengewinde (60) aufweist, das den genannten Gewindeabschnitt bildet,
wobei die Gewindehülse (58) vorzugsweise ein Innengewinde, insbesondere ein metrisches Innengewinde aufweist, und/oder
wobei die Gewindehülse (58) vorzugsweise aus einem Profilband gewickelt ist, das eine radial innere und eine radial äußere Seite aufweist, wobei auf der radial äußeren Seite ein Gewindegrat (52) ausgebildet ist, der geeignet ist, in das mithilfe des Furchwerkzeugs (10) gefurchte Innengewinde im Bohrloch eingeschraubt zu werden, und/oder
wobei die Gewindehülse (58) zumindest überwiegend aus korrosionsfestem Stahl, Nichteisenmetall, insbesondere Aluminium oder Kunststoff, insbesondere faserverstärktem Kunststoff besteht, oder
bei dem der Anker (40) mindestens zweiteilig ausgebildet ist, und folgendes umfasst:

eine Wendel (44), die in das mithilfe des Furchwerkzeugs (10) gefurchte Innengewinde im Bohrloch einschraubbar ist, wobei die Wendel (44) vorzugsweise durch ein gewickeltes Profilband gebildet ist, das eine radial innere und eine radial äußere Seite aufweist, wobei auf der radial äußeren Seite ein Gewindegrat (52) ausgebildet ist, der geeignet ist, in das mithilfe des Furchwerkzeugs (10) gefurchte Innengewinde im Bohrloch eingeschraubt zu werden, und
eine Schraube oder Gewindestange (42), mit einem Außengewinde (46), das in die Wendel (44) einschraubbar ist, wobei die Gewindestange (42) insbesondere durch einen Schalungsankerstab gebildet wird, und/oder wobei die Schraube oder Gewindestange vorzugsweise ein im Querschnitt rechteckiges oder trapezförmiges Gewinde hat, mit einer abgeflachten Gewindespitze (50), die zumindest einen Teil des genannten Kernabschnitts des zweiteiligen Ankers (40) bildet, und

wobei das genannte Einsetzen des Ankers (40) in das Bohrloch folgendes umfasst:

Einschrauben der Wendel (44) in das mithilfe des Furchtwerkzeugs (10) gefurchte Innengewinde im Bohrloch, und
Einschrauben der Schraube oder Gewindestange (42) in die Wendel (44).

13. Verfahren zum Armieren eines mineralischen Befestigungsgrundes, insbesondere von Beton, oder zum Ausbilden eines Übergreifungsstoßes, insbesondere für eine Anschlussbewehrung, in einem mineralischen Befestigungsgrund (70), insbesondere Beton, mithilfe eines Ankers (40), wobei das Verfahren ein Verfahren zum befestigen des Ankers (40) in einem Befestigungsgrund nach einem der Ansprüche 8 bis 12 umfasst.

14. Furchwerkzeug (10) zum Furchen eines Innengewindes in einem Bohrloch, das in einem mineralischen Verankerungsgrund (70) ausgebildet ist, wobei das Furchwerkzeug (10) folgendes umfasst:

einen zumindest näherungsweise zylindrischen oder konischen Grundkörper (12) mit einem führenden und einem nachlaufenden Ende (12a, 12b), wobei ein Kraftangriff (14) vorgesehen ist, über den ein Drehmoment zum Eindrehen des Furchwerkzeugs (10) in das Bohrloch und zum Furchen des Gewindes auf den Grundkörper (12) übertragbar ist, und mit einer Außenfläche, auf der ein Furchgewinde (18) ausgebildet ist, welches geeignet ist, ein Innengewinde in die Wand des Bohrlochs zu furchen,
**dadurch gekennzeichnet, dass** das Furchwerkzeug (10) an seinem führenden Ende (12a) ein Antriebselement (34) aufweist, welches geeignet, mit einem Antriebselement eines Ankers (40) zusammenzuwirken, der in ein mit dem Furchwerkzeug (10) behandeltes Bohrloch einzuschrauben ist, wobei das Antriebselement (34) ein Sechskant- oder ein Sechsrundantrieb ist.

15. Furchwerkzeug (10) nach Anspruch 14, bei dem auf der Außenfläche des Grundkörpers (12) eine Mehrzahl von Erhebungen (24) ausgebildet sind, die jeweils eine Schneidkante (26) aufweisen, wobei sämtliche Schneidkanten (26) zumindest abschnittsweise auf einem gedachten Zylinder liegen, und die geeignet sind, beim Eindrehen des Furchwerkzeugs (10) in das Bohrloch die Innenwand des Bohrlochs zumindest teilweise abzutragen, um das Bohrloch dem gedachten Zylinder anzupassen, wobei das Furchwerkzeug (10) insbesondere zur Verwendung als Teil eines Systems nach einem der Ansprüche 1 bis 7 geeignet ist.

## Claims

1. A system for fastening an anchor (40) in a borehole in a mineral substrate, in particular concrete, mortar or masonry, comprising

an anchor (40) having a core section and a thread section (52), the core section having a core diameter $d_K$ and the thread section having an outer diameter $d_G$, and
a grooving tool (10) for grooving an internal thread in the borehole, the grooving tool (10) comprising the following:

an at least approximately cylindrical or conical base body (12) having a leading and a trailing end (12a, 12b), a force application device being provided, via which a torque for screwing the grooving tool (10) into the borehole and for grooving the thread is transmitted to the base body (12), the base body (12) having an outer surface on which a grooving thread (18) is formed, which is suitable for grooving the internal thread into the wall of the borehole, **characterized in that**
the grooving tool (10) has a drive element (34) at its leading end (12a), which is suitable to interact with a force application device of the anchor (40) or a part of the same, which is to be screwed into the borehole treated with the grooving tool, wherein the drive element (34) is a a polygonal drive or a hexalobal drive, or wherein the drive element is formed by an element which is suitable for engaging with a force application device of the anchor, said force application device being formed as a notch.

2. A system for fastening an anchor (40) in a borehole in a mineral substrate, in particular concrete, mortar or masonry, comprising

an anchor (40) having a core section and a thread section (52), the core section having a core diameter $d_K$ and the thread section having an outer diameter $d_G$, and

a grooving tool (10) for grooving an internal thread in the borehole, the grooving tool (10) comprising the following:

an at least approximately cylindrical or conical base body (12) having a leading and a trailing end (12a, 12b), a force application device being provided, via which a torque for screwing the grooving tool (10) into the borehole and for grooving the thread is transmitted to the base body (12), the base body (12) having an outer surface on which a grooving thread (18) is formed, which is suitable for grooving the internal thread into the wall of the borehole, **characterized in that**

the grooving tool (10) has a drive element (34) at its leading end (12a), which is suitable to interact with a force application device of the anchor (40) or a part of the same, which is to be screwed into the borehole treated with the grooving tool,

in which the drive element (34) of the grooving tool (10) and the force application device of the anchor (40) are adapted to one another such that they can assume an engagement position, and in this engagement position

- the relative orientation of the grooving tool (10) and the anchor (40) or said part of the same is predetermined such that the grooving thread (18) lies on an imaginary continuation of the thread of the anchor (40),
- when the grooving tool (10) is rotated in the screwing-in direction, a torque can be transmitted from its drive element (34) to the force application device of the anchor (40) or part of the same, and
- when the grooving tool (10) is rotated counter to the screwing-in direction, no torque can be transmitted from its drive element (34) to the force application device of the anchor (40) or the part of the same.

3. The system according to claim 2, in which the drive element (34) of the grooving tool has a first stop surface (80), the surface normal n of which forms an angle of at most 45° with a tangential vector **t,** preferably at most 30° and particularly preferably at most 15°,

wherein the tangential vector **t** is defined as the vector product of an axial vector **a,** which is directed towards the leading end (12a) of the grooving tool (10), and a radial vector **r,** the tip of which lies on the first stop surface (80), so that: **t = a x r,**

and wherein the force application device of the anchor (40) or said part of the same has a first stop surface (82) which rests against the first stop surface of the drive element (34) when the drive element (34) and the force application device assume the engagement position the drive element (34) of the grooving tool (10) preferably has a second stop surface (84), the surface normal of which has a component in the direction of the axial vector a, and the force application device of the anchor (40) or said part of the same has a second stop surface (86) that rests on the second stop surface (84) of the drive element (34) when the drive element (34) and the force application device assume the engagement position.

4. The system according to any one of claims 2 or 3, in which the drive element (34) has an axial projection (88) and the force application device of the anchor (40) or said part of the same has a receptacle for receiving the axial projection (88) when the drive element (34) and the force application device assume the engagement position, in which the anchor is preferably formed by a threaded sleeve or the part of the anchor (40) is formed by a spiral coil (44), and the receptacle for receiving the axial projection (88) is formed by the interior of the threaded sleeve or the spiral coil.

5. The system according to any one of the preceding claims, in which a plurality of elevations (24) are formed on the outer surface of the base body (12) of the grooving tool (10), each having a cutting edge (26), wherein all cutting edges (26) lie at least with a section thereof on an imaginary cylinder having a diameter $(d_o)$, and wherein the cutting edges (26) are suitable to at least partially remove the inner wall of the borehole when screwing the grooving tool (10) into the borehole in order to adapt the inner wall of the borehole to the imaginary cylinder, wherein the cutting edge (26) is preferably formed by an edge on which a substantially radial surface (28) inclined by less than 30°, preferably less than 15°, with respect to the radial direction, and a substantially tangential surface (30) inclined by at least 45° with respect to the radial direction, meet one another, wherein the surface normal (32) of the substantially radial surface (28) points in the screwing-in direction, and/or wherein the grooving tool (10) has at least four, preferably at least six of said elevations (24) with associated cutting edge (26).

6. The system according to any one of the preceding claims, wherein the grooving thread (18) has a plurality of turns, and the plurality of elevations (24) are arranged between turns of the grooving thread, and/or wherein the grooving thread (18) has fewer than four turns, preferably between 2.8 and 3.8 turns, and/or wherein the grooving tool (10), preferably on the side of the grooving thread (18) closer to the trailing end (12b), has an annular wiping element (32) suitable for wiping drill dust from the borehole wall, and/or wherein the outer diameter of the grooving thread (18) decreases in the direction of the leading end (12a), and/or wherein recesses (20) are formed in the grooving thread (18) and incisors (22), in particular wedge-shaped incisors, are formed between adjacent recesses, wherein at least some of the recesses (20) preferably correspond to the entire height of the grooving thread (18), so that the grooving thread (18) is interrupted in sections.

7. The system according to one of claims 1 to 6, in which the anchor is formed by a threaded sleeve (58) having an external thread (52) forming said thread section,

wherein the threaded sleeve (58) preferably has an internal thread, in particular a metric internal thread, and/or wherein the threaded sleeve (58) is preferably wound from a profile strip having a radially inner and a radially outer side, wherein a thread ridge (52) is formed on the radially outer side, which thread ridge (52) is suitable to be screwed into the internal thread in the borehole grooved with the aid of the grooving tool (10), and/or wherein the threaded sleeve (58) consists at least predominantly of corrosion-resistant steel, non-ferrous metal, in particular aluminum or plastic, in particular fiber-reinforced plastic, or in which the anchor (40) is formed in at least two parts and comprises the following:

a spiral coil (44) which can be screwed into the internal thread in the borehole grooved with the aid of the grooving tool (10), wherein the spiral coil (44) is preferably formed by a wound profile strip having a radially inner and a radially outer side, wherein a thread ridge (52) is formed on the radially outer side, which thread ridge (52) is suitable for being screwed into the internal thread in the borehole grooved with the aid of the grooving tool (10), and a screw or threaded rod (42) having an external thread (46) suitable to be screwed into the spiral coil (44), wherein the threaded rod (42) is formed in particular by a formwork anchor rod, and/or wherein the screw or threaded rod (42) preferably has a thread (46) having a rectangular or trapezoidal cross section, having a flattened thread tip (50) forming at least part of said core section of the two-part anchor (40).

8. A method for fastening an anchor (40) having a core section and a thread section in a borehole in a mineral substrate, comprising the following steps:

drilling a borehole,
grooving an internal thread in the borehole by screwing a grooving tool (10) into the borehole, and
inserting the anchor (40) into the borehole,
the grooving tool (10) comprising the following:

an at least approximately cylindrical or conical base body having a leading and a trailing end (12a, 12b), a force application device (14) being provided via which a torque for screwing the grooving tool (10) into the borehole and for grooving the thread is transferred to the base body (12), the base body (12) having an outer surface on which a grooving thread (18) is formed, which is suitable for grooving the inner thread into the wall of the borehole,
**characterized in that** the grooving tool (10) at its leading end (12a) has a drive element (34) suitable for interacting with a force application device of the anchor (40) or of a part of the same, and wherein in said step of inserting the anchor (40) into the borehole using said drive element (34), the anchor (40) or the part of the same is screwed into the borehole treated with the grooving tool (10).

9. The method according to claim 8, wherein the drive element (34) is a polygon or a hexalobe drive, and/or wherein inserting the anchor (40) into the borehole comprises the following steps:

- bringing the drive element (34) of the grooving tool (10) and the force application device of the anchor (40) or the part of the same into an engagement position in which the relative orientation of the grooving tool (10) and the anchor (40) or said part of the same is predetermined such that the grooving thread (18) lies on an imaginary continuation of the thread of the anchor (40),
- rotating the grooving tool (10) in the screwing-in direction, wherein a torque is transmitted from its drive element (34) to the force application device of the anchor (40) or the part of the same in order to screw the anchor (40) or the part of the same into the borehole until the anchor (40) or part of the anchor is located completely and the grooving tool (10) is at least partially located in the borehole,
- rotating the grooving tool (10) counter to the screwing-in direction in order to screw it out of the borehole, wherein it does not transmit any torque from its drive element (34) to the force application device of the anchor (40) or of the part thereof.

10. The method according to claim 9, in which the drive element (34) of the grooving tool has a first stop surface (80), the surface normal **n** of which forms an angle of at most 45° with a tangential vector **t,** preferably at most 30° and particularly preferably at most 15°, wherein he tangential vector **t** is defined as the vector product of an axial vector **a,** which is directed towards the leading end (12a) of the grooving tool (10), and a radial vector **r,** the tip of which lies on the first stop surface (80), so that: **t = a x r,**
and wherein the force application device of the anchor (40) or said part of the same has a first stop surface (82) which rests against the first stop surface of the drive element (34) when the drive element (34) and the force application device assume the engagement position, in which the drive element (34) of the grooving tool (10) preferably has a second stop surface (84), the surface normal of which has a component in the direction of the axial vector **a,** and the force application device of the anchor (40) or said part of the same has a second stop surface (86) that rests on the second stop surface (84) of the drive element (34) when the drive element (34) and the force application device assume the engagement position.

11. The method according to claim 9 or 10, in which the drive element (34) has an axial projection (88) and the force application device of the anchor (40) has a receptacle in which the axial projection (88) is at least partially received when the drive element (34) and the force application device are brought into the engagement position, in which the anchor is preferably formed by a threaded sleeve (58) or the part of the anchor (40) is formed by a spiral coil (44), and the receptacle for receiving the axial projection (88) is formed by the interior of the threaded sleeve or the spiral coil.

12. The method according to one of claims 8 to 11, in which the anchor is formed by a screw or threaded rod (76), in which said thread section is connected to said core section in a force-fitting, material - or form-fitting manner, wherein the screw or threaded rod (76) preferably at least predominantly consists of corrosion-resistant steel, non-ferrous metal, in particular aluminum or plastic, in particular, fiber-reinforced plastic, or in which the anchor is formed by a threaded sleeve (58) having an external thread (60) forming said thread section,

wherein the threaded sleeve (58) preferably has an internal thread, in particular a metric internal thread, and/or wherein the threaded sleeve (58) is preferably wound from a profile strip having a radially inner and a radially outer side, wherein a thread ridge (52) is formed on the radially outer side, which thread ridge (52) is suitable to be screwed into the internal thread grooved with the aid of the grooving tool (10) in the borehole, and/or wherein the threaded sleeve (58) consists at least predominantly of corrosion-resistant steel, non-ferrous metal, in particular aluminum or plastic, in particular fiber-reinforced plastic, or in which the anchor (40) is formed in at least two parts and comprises the following:

a spiral coil (44) which can be screwed into the internal thread in the borehole grooved with the aid of the grooving tool (10), wherein the spiral coil (44) is preferably formed by a wound profile strip having a radially inner and a radially outer side, wherein a thread ridge (52) is formed on the radially outer side, which thread ridge (52) is suitable for being screwed into the internal thread in the borehole grooved with the aid of the grooving tool (10), and
a screw or threaded rod (42) having an external thread (46) which can be screwed into the spiral coil (44), wherein the threaded rod (42) is formed in particular by a formwork anchor rod, and/or wherein the screw or threaded rod preferably has a thread that is rectangular or trapezoidal in cross section, having a flattened thread tip (50) forming at least part of said core section of the two-part anchor (40), and
wherein said insertion of the anchor (40) into the borehole comprises the following:

screwing the spiral coil (44) into the internal thread in the borehole that has been grooved with the aid of the grooving tool (10), and
screwing the screw or threaded rod (42) into the spiral coil (44).

13. A method for reinforcing a mineral mounting base, in particular concrete, or for forming an overlap joint, in particular for connecting reinforcement, in a mineral mounting base (70), in particular concrete, with the aid of an anchor (40), the method comprising a method for fastening the anchor (40) in a mounting base according to any one of claims 8 to 12.

14. A grooving tool (10) for grooving an internal thread in a borehole formed in a mineral substrate, the grooving tool (10) comprising the following:

an at least approximately cylindrical or conical base body (12) having a leading and a trailing end (12a, 12b), a force application device being provided, via which a torque for screwing the grooving tool (10) into the borehole and for grooving the thread is transmitted to the base body (12), the base body (12) having an outer surface on which a grooving thread (18) is formed, which is suitable for grooving the internal thread into the wall of the borehole, **characterized in that**
the grooving tool (10) has a drive element (34) at its leading end (12a), which is suitable to interact with a force application device of an anchor (40) or a part of the same, which is to be screwed into the borehole treated with the grooving tool, wherein the drive element (34) is preferably a hexagonal drive or a hexalobal drive.

15. The grooving tool (10) according to claim 14, in which a plurality of elevations (24) are formed on the outer surface of the base body (12) of the grooving tool (10), each having a cutting edge (26), wherein all cutting edges (26) lie at least with a section thereof on an imaginary cylinder having a diameter ($d_o$), and wherein the cutting edges (26) are suitable to at least partially remove the inner wall of the borehole when screwing the grooving tool (10) into the borehole in order to adapt the inner wall of the borehole to the imaginary cylinder, wherein said grooving tool (10) is in particular suitable for use as part of a system according to one of claims 1 to 7.

## Revendications

1. Système de fixation d'un ancrage (40) dans un trou de forage dans un sous-sol minéral, en particulier du béton, du mortier ou de la maçonnerie, comprenant

   un ancrage (40) avec une section de noyau et une section filetée, la section de noyau ayant un diamètre de noyau $d_K$ et la section filetée ayant un diamètre extérieur $d_G$, et
   un outil d'alésage (10) pour l'alésage d'un filetage intérieur dans le trou de forage, l'outil d'alésage (10) comprenant ce qui suit :

   un corps de base (12) au moins approximativement cylindrique ou conique avec une extrémité avant et une extrémité arrière (12a, 12b), une structure d'application de force étant prévue, par le biais de laquelle un couple peut être transmis au corps de base (12) pour le vissage de l'outil d'alésage (10) dans le trou de forage et pour l'alésage du filetage, le corps de base (12) ayant une surface extérieure sur laquelle est réalisé un filetage d'alésage (18) qui est approprié pour l'alésage du filetage intérieur dans la paroi du trou de forage, **caractérisé en ce que** l'outil d'alésage (10) présente à son extrémité avant (12a) un élément d'entraînement (34) qui est approprié pour coopérer avec une structure d'application de force par l'ancrage (40) ou d'une partie de celui-ci, qui doit être vissée dans le trou de forage traité avec l'outil d'alésage, l'élément d'entraînement (34) étant un entraînement polygonal ou un entraînement hexagonal, ou l'élément d'entraînement étant formé par un élément qui est approprié pour s'engager dans une structure d'application de force réalisée sous forme de rainure de l'ancrage (40).

2. Système de fixation d'un ancrage (40) dans un trou de forage dans un sous-sol minéral, en particulier du béton, du mortier ou de la maçonnerie, comprenant

   un ancrage (40) avec une section de noyau et une section filetée, la section de noyau ayant un diamètre de noyau $d_K$ et la section filetée ayant un diamètre extérieur $d_G$, et
   un outil d'alésage (10) pour l'alésage d'un filetage intérieur dans le trou de forage, l'outil d'alésage (10) comprenant ce qui suit :

   un corps de base (12) au moins approximativement cylindrique ou conique avec une extrémité avant et une extrémité arrière (12a, 12b), une structure d'application de force étant prévue, par le biais de laquelle un couple peut être transmis au corps de base (12) pour le vissage de l'outil d'alésage (10) dans le trou de forage et pour l'alésage du filetage, le corps de base (12) ayant une surface extérieure sur laquelle est réalisé un filetage d'alésage (18) qui est approprié pour l'alésage du filetage intérieur dans la paroi du trou de forage, **caractérisé en ce que** l'outil d'alésage (10) présente à son extrémité avant (12a) un élément d'entraînement (34) qui est approprié pour coopérer avec une structure d'application de force par l'ancrage (40) ou d'une partie de celui-ci, qui doit être vissée dans le trou de forage traité avec l'outil d'alésage,
   l'élément d'entraînement (34) de l'outil d'alésage (10) et la structure d'application de force par l'ancrage (40) étant adaptés l'un à l'autre de telle sorte qu'ils peuvent adopter une position d'engagement, et

- l'orientation relative de l'outil d'alésage (10) et de l'ancrage (40) ou de ladite partie de celui-ci étant fixée de telle sorte que le filetage d'alésage (18) se trouve sur un prolongement imaginaire du filetage de l'ancrage (40),

- lors d'une rotation de l'outil d'alésage (10) dans la direction de vissage, un couple pouvant être transmis par son élément d'entraînement (34) à la structure d'application de force par l'ancrage (40) ou la partie de celui-ci, et

- lors d'une rotation de l'outil d'alésage (10) dans la direction opposée à la direction de vissage, aucun couple ne pouvant être transmis par son élément d'entraînement (34) à la structure d'application de force par l'ancrage (40) ou la partie de celui-ci.

3. Système selon la revendication 2, dans lequel l'élément d'entraînement (34) de l'outil d'alésage présente une première surface de butée (80) dont la normale à la surface **n** forme avec un vecteur tangentiel **t** un angle d'au maximum 45°, de préférence d'au maximum 30° et de manière particulièrement préférée d'au maximum 15°,

le vecteur tangentiel **t** étant défini en tant que produit vectoriel d'un vecteur axial **a,** qui est dirigé dans la direction de l'extrémité avant (12a) de l'outil d'alésage (10), et d'un vecteur radial **r,** dont la pointe se trouve sur la première surface de butée (80), de telle sorte que l'on a : **t = a x r,**
et la structure d'application de force par l'ancrage (40) ou ladite partie de celui-ci présentant une première surface de butée (82) qui s'applique contre la première surface de butée de l'élément d'entraînement (34) lorsque l'élément d'entraînement (34) et la structure d'application de force adoptent la position d'engagement,
l'élément d'entraînement (34) de l'outil d'alésage (10) présentant de préférence une deuxième surface de butée (84) dont la normale à la surface a une composante dans la direction du vecteur axial **a**, et la structure d'application de force par l'ancrage (40) ou ladite partie de celui-ci présentant une deuxième surface de butée (86) qui s'applique contre la deuxième surface de butée (84) de l'élément d'entraînement (34) lorsque l'élément d'entraînement (34) et la structure d'application de force adoptent la position d'engagement.

4. Système selon l'une quelconque des revendications 2 ou 3, dans lequel l'élément d'entraînement (34) présente une saillie axiale (88) et la structure d'application de force par l'ancrage (40) ou ladite partie de celui-ci présente un logement pour recevoir la saillie axiale (88) lorsque l'élément d'entraînement (34) et la structure d'application de force adoptent la position d'engagement,
l'ancrage étant formé de préférence par une douille filetée ou la partie de l'ancrage (40) étant formé par une hélice (44), et le logement pour recevoir la saillie axiale (88) étant formé par l'espace intérieur de la douille filetée ou de l'hélice.

5. Système selon l'une quelconque des revendications précédentes, dans lequel une pluralité de rehaussements (24) sont réalisés sur la surface extérieure du corps de base (12) de l'outil d'alésage (10), lesquels présentent à chaque fois une arête de coupe (26), toutes les arêtes de coupe (26) se trouvant au moins en partie sur un cylindre imaginaire avec un diamètre ($d_o$), et les arêtes de coupe (26) étant appropriées pour enlever au moins en partie la paroi intérieure du trou de forage lors du vissage de l'outil d'alésage (10) dans le trou de forage, afin d'adapter la paroi intérieure du trou de forage au cylindre imaginaire,

l'arête de coupe (26) étant formée de préférence par une arête au niveau de laquelle une surface essentiellement radiale (28), qui est inclinée par rapport à la direction radiale de moins de 30°, de préférence de moins de 15°, et une surface essentiellement tangentielle (30), qui est inclinée par rapport à la direction radiale d'au moins 45°, viennent en butée l'une contre l'autre, la normale à la surface (32) de la surface essentiellement radiale (28) étant orientée dans la direction de vissage, et/ou
l'outil d'alésage (10) présentant de préférence au moins quatre, de préférence au moins six desdits rehaussements (24) avec une arête de coupe associée (26).

6. Système selon l'une quelconque des revendications précédentes, dans lequel le filetage d'alésage (18) présente une pluralité de spires, et la pluralité de rehaussements (24) sont disposés entre des spires du filetage d'alésage (18), et/ou

le filetage d'alésage (18) présentant moins de quatre spires, de préférence entre 2,8 et 3,8 spires, et/ou
l'outil d'alésage (10), de préférence sur le côté du filetage d'alésage (18) plus proche de l'extrémité arrière (12b), ayant un élément de raclage annulaire (32) qui est approprié pour racler la farine de forage de la paroi du trou de forage, et/ou
le diamètre extérieur du filetage d'alésage (18) diminuant en direction de l'extrémité avant (12a), et/ou

des évidements (20) étant réalisés dans le filetage d'alésage (18) et des dents de coupe (22), en particulier des dents de coupe en forme de coin, étant formées entre des évidements adjacents, au moins une partie des évidements (20) correspondant de préférence à toute la hauteur du filetage d'alésage (18), de telle sorte que le filetage d'alésage (18) soit interrompu en partie.

7. Système selon l'une quelconque des revendications 1 à 6, dans lequel l'ancrage est formé par une douille filetée (58) qui présente un filetage extérieur (52) qui forme ladite partie filetée,

la douille filetée (58) présentant de préférence un filetage intérieur, en particulier un filetage intérieur métrique, et/ou
la douille filetée (58) étant de préférence enroulée à partir d'une bande profilée qui présente un côté radialement intérieur et un côté radialement extérieur, une bavure filetée (52) étant réalisée sur le côté radialement extérieur, laquelle bavure est appropriée pour être vissée dans le filetage intérieur dans le trou de forage écrou à l'aide de l'outil d'alésage (10), et/ou
la douille filetée (58) se composant au moins principalement d'acier résistant à la corrosion, de métal non ferreux, en particulier d'aluminium ou de plastique, en particulier de plastique renforcé par des fibres, ou
dans lequel l'ancrage (40) est réalisé au moins en deux parties et comprend ce qui suit :

une hélice (44) qui peut être vissée dans le filetage intérieur dans le trou de forage écroui à l'aide de l'outil d'alésage (10), l'hélice (44) étant de préférence formée par une bande profilée enroulée qui présente un côté radialement intérieur et un côté radialement extérieur, une bavure filetée (52) étant réalisée sur le côté radialement extérieur, laquelle bavure filetée est appropriée pour être vissée dans le filetage intérieur dans le trou de forage écrou à l'aide de l'outil d'alésage (10), et
une vis ou une tige filetée (42), avec un filetage extérieur (46) qui est approprié pour être vissé dans l'hélice (44), la tige filetée (42) étant formée en particulier par une tige d'ancrage de coffrage, et/ou la vis ou la tige filetée (42) ayant de préférence un filetage (46) de section transversale rectangulaire ou trapézoïdale, avec une pointe de filetage aplatie (50) qui forme au moins une partie de ladite section de noyau de l'ancrage en deux parties (40).

8. Procédé de fixation d'un ancrage (40) avec une section de noyau et une section filetée dans un trou de forage dans un sous-sol minéral, comprenant les étapes suivantes :

forage d'un trou de forage,
alésage d'un filetage intérieur dans le trou de forage par vissage d'un outil d'alésage (10) dans le trou de forage, et insertion de l'ancrage (40) dans le trou de forage,
l'outil d'alésage (10) comprenant ce qui suit :

un corps de base au moins approximativement cylindrique ou conique avec une extrémité avant et une extrémité arrière (12a, 12b), une structure d'application de force (14) étant prévue, par le biais de laquelle un couple est transmis au corps de base (12) pour le vissage de l'outil d'alésage (10) dans le trou de forage et pour l'alésage du filetage, le corps de base (12) ayant une surface extérieure sur laquelle est réalisé un filetage d'alésage (18) qui est approprié pour l'alésage du filetage intérieur dans la paroi du trou de forage, **caractérisé en ce que** l'outil d'alésage (10) présente à son extrémité avant (12a) un élément d'entraînement (34) qui est approprié pour coopérer avec une structure d'application de force par l'ancrage (40) ou d'une partie de celui-ci, et l'ancrage (40) ou la partie de celui-ci, dans ladite étape d'insertion de l'ancrage dans le trou de forage, étant vissée à l'aide de l'élément d'entraînement (34) dans le trou de forage traité avec l'outil d'alésage (10).

9. Procédé selon la revendication 8, dans lequel l'élément d'entraînement (34) est un entraînement polygonal ou un entraînement hexagonal, ou
dans lequel l'insertion de l'ancrage (40) dans le trou de forage comprend les étapes suivantes :

- amenée de l'élément d'entraînement (34) de l'outil d'alésage (10) et de la structure d'application de force par l'ancrage (40) ou de la partie de celui-ci dans une position d'engagement, dans laquelle l'orientation relative de l'outil d'alésage (10) et de l'ancrage (40) ou de ladite partie de celui-ci est fixée de telle sorte que le filetage d'alésage (18) se trouve sur un prolongement imaginaire du filetage de l'ancrage (40),
- rotation de l'outil d'alésage (10) dans la direction de vissage, un couple étant transmis par son élément d'entraînement (34) à la structure d'application de force par l'ancrage (40) ou la partie de celui-ci, afin de visser l'ancrage (40) ou la partie de celui-ci dans le trou de forage, jusqu'à ce que l'ancrage (40) ou la partie de l'ancrage se trouve complètement et l'outil d'alésage (10) se trouve au moins en partie dans le trou de forage,
- rotation de l'outil d'alésage (10) dans la direction opposée à la direction de vissage, afin de le faire sortir du trou de forage, aucun couple ne pouvant être transmis par son élément d'entraînement (34) à la structure d'application de force par l'ancrage (40) ou la partie de celui-ci.

10. Procédé selon la revendication 9, dans lequel l'élément d'entraînement (34) de l'outil d'alésage présente une première surface de butée (80) dont la normale à la surface n forme avec un vecteur tangentiel **t** un angle d'au maximum 45°, de préférence d'au maximum 30° et de manière particulièrement préférée d'au maximum 15°,

le vecteur tangentiel t étant défini en tant que produit vectoriel d'un vecteur axial **a,** qui est dirigé dans la direction de l'extrémité avant (12a) de l'outil d'alésage (10), et d'un vecteur radial **r,** dont la pointe se trouve sur la première surface de butée (80), de telle sorte que l'on a : **t = a x r,**
et la structure d'application de force par l'ancrage (40) ou ladite partie de celui-ci présentant une première surface de butée (82) qui s'applique contre la première surface de butée de l'élément d'entraînement (34) lorsque l'élément d'entraînement (34) et la structure d'application de force adoptent la position d'engagement,
l'élément d'entraînement (34) de l'outil d'alésage (10) présentant de préférence une deuxième surface de butée (84) dont la normale à la surface a une composante dans la direction du vecteur axial **a**, et la structure d'application de force par l'ancrage (40) ou ladite partie de celui-ci présentant une deuxième surface de butée (86) qui s'applique contre la deuxième surface de butée (84) de l'élément d'entraînement (34) lorsque l'élément d'entraînement (34) et la structure d'application de force adoptent la position d'engagement.

11. Procédé selon l'une quelconque des revendications 9 ou 10, dans lequel l'élément d'entraînement (34) présente une saillie axiale (88) et la structure d'application de force par l'ancrage (40) présente un logement dans lequel la saillie axiale (88) est reçue au moins en partie lorsque l'élément d'entraînement (34) et la structure d'application de force sont amenés dans la position d'engagement,
l'ancrage étant formé de préférence par une douille filetée (58) ou la partie de l'ancrage (40) étant formé par une hélice (44), et le logement pour recevoir la saillie axiale (88) étant formé par l'espace intérieur de la douille filetée ou de l'hélice.

12. Procédé selon l'une quelconque des revendications 8 à 11, dans lequel l'ancrage est formé par une vis ou une tige filetée (76), dans lequel ladite section filetée est reliée à force, par liaison de matière ou par complémentarité de forme à ladite section de noyau, la vis ou la tige filetée (76) se composant de préférence au moins principalement d'acier résistant à la corrosion, de métal non ferreux, en particulier d'aluminium ou de plastique, en particulier de plastique renforcé par des fibres, ou

dans lequel l'ancrage est formé par une douille filetée (58) qui présente un filetage extérieur (60) qui forme ladite section filetée,
la douille filetée (58) présentant de préférence un filetage intérieur, en particulier un filetage intérieur métrique, et/ou
la douille filetée (58) étant de préférence enroulée à partir d'une bande profilée qui présente un côté radialement intérieur et un côté radialement extérieur, une bavure filetée (52) étant réalisée sur le côté radialement extérieur, laquelle bavure filetée est appropriée pour être vissée dans le filetage intérieur dans le trou de forage écroui à l'aide de l'outil d'alésage (10), et/ou
la douille filetée (58) se composant au moins principalement d'acier résistant à la corrosion, de métal non ferreux, en particulier d'aluminium ou de plastique, en particulier de plastique renforcé par des fibres, ou
dans lequel l'ancrage (40) est réalisé au moins en deux parties et comprend ce qui suit :

une hélice (44) qui peut être vissée dans le filetage intérieur dans le trou de forage écroui à l'aide de l'outil d'alésage (10), l'hélice (44) étant de préférence formée par une bande profilée enroulée qui présente un côté radialement intérieur et un côté radialement extérieur, une bavure filetée (52) étant réalisée sur le côté radialement extérieur, laquelle bavure filetée est appropriée pour être vissée dans le filetage intérieur dans le trou de forage écroui à l'aide de l'outil d'alésage (10), et
une vis ou une tige filetée (42), avec un filetage extérieur (46) qui peut être vissé dans l'hélice (44), la tige filetée (42) étant formée en particulier par une tige d'ancrage de coffrage, et/ou la vis ou la tige filetée ayant de préférence un filetage de section transversale rectangulaire ou trapézoïdale, avec une pointe de filetage aplatie (50) qui forme au moins une partie de ladite section de noyau de l'ancrage en deux parties (40), et ladite insertion de l'ancrage (40) dans le trou de forage comprenant ce qui suit :

le vissage de l'hélice (44) dans le filetage intérieur dans le trou de forage écroui à l'aide de l'outil d'alésage (10), et

le vissage de la vis ou de la tige filetée (42) dans l'hélice (44).

13. Procédé de renforcement d'un fond de fixation minéral, en particulier de béton, ou de formation d'un joint de recouvrement, en particulier pour une armature de raccordement, dans un fond de fixation minéral (70), en particulier du béton, à l'aide d'un ancrage (40), le procédé comprenant un procédé de fixation de l'ancrage (40) dans un fond de fixation selon l'une quelconque des revendications 8 à 12.

14. Outil d'alésage (10) pour l'alésage d'un filetage intérieur dans un trou de forage, qui est réalisé dans un fond d'ancrage minéral (70), l'outil d'alésage (10) comprenant ce qui suit :

un corps de base (12) au moins approximativement cylindrique ou conique avec une extrémité avant et une extrémité arrière (12a, 12b), une structure d'application de force (14) étant prévue, par le biais de laquelle un couple peut être transmis au corps de base (12) pour le vissage de l'outil d'alésage (10) dans le trou de forage et pour l'alésage du filetage, et avec une surface extérieure sur laquelle est réalisé un filetage d'alésage (18) qui est approprié pour l'alésage d'un filetage intérieur dans la paroi du trou de forage,
**caractérisé en ce que** l'outil d'alésage (10) présente à son extrémité avant (12a) un élément d'entraînement (34) qui est approprié pour coopérer avec un élément d'entraînement d'un ancrage (40) qui doit être vissée dans un trou de forage traité avec l'outil d'alésage (10), l'élément d'entraînement (34) étant un entraînement hexagonal ou un entraînement hexagonal.

15. Outil d'alésage (10) selon la revendication 14, dans lequel une pluralité de rehaussements (24) sont réalisés sur la surface extérieure du corps de base (12), lesquels présentent à chaque fois une arête de coupe (26), toutes les arêtes de coupe (26) se trouvant au moins en partie sur un cylindre imaginaire, et lesquels sont appropriés pour enlever au moins en partie la paroi intérieure du trou de forage lors du vissage de l'outil d'alésage (10) dans le trou de forage, afin d'adapter le trou de forage au cylindre imaginaire,
l'outil d'alésage (10) étant approprié en particulier pour l'utilisation en tant que partie d'un système selon l'une quelconque des revendications 1 à 7.

**Fig. 1a**

**Fig. 1b**

**Fig. 1c**

**Fig. 1d**

**Fig. 1e**

**Fig. 2a**

**Fig. 2b**

**Fig. 2c**

**Fig. 2d**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**EP 3 880 422 B1**

**IN DER BESCHREIBUNG AUFGEFÜHRTE DOKUMENTE**

**In der Beschreibung aufgeführte Patentdokumente**

- EP 0625400 A1
- DE 19735280 A1
- DE 19905845 A1
- WO 2017025318 A1
- DE 102016125201 A1
- EP 3388597 A1
- WO 2017025318 A
- DE 10201309987 A1
- EP 3219442 A1